# EUROPÄISCHE PATENTSCHRIFT

(11) **EP 2 982 903 B1**
(45) Veröffentlichungstag und Bekanntmachung des Hinweises auf die Patenterteilung: **31.08.2022**
(21) Anmeldenummer: 15177272.0
(22) Anmeldetag: 17.07.2015
(51) Int. Cl.: F21S 8/04, F21V 5/00, G02B 6/00

(54) **LEUCHTENANORDNUNG UND DAMIT AUSGESTATTETE LEUCHTVORRICHTUNG**
LIGHT ASSEMBLY AND LIGHTING DEVICE EQUIPPED WITH THE SAME
SYSTÈME D'ÉCLAIRAGE ET DISPOSITIF D'ÉCLAIRAGE EQUIPÉ DUDIT SYSTÈME

(30) Priorität: 17.07.2014 DE 202014103304 U
(43) Veröffentlichungstag der Anmeldung: 10.02.2016
(73) Patentinhaber: Zumtobel Lighting GmbH, 6850 Dornbirn (AT)
(72) Erfinder: Machate, Andreas, 88239 Wangen im Allgäu (DE)
(74) Vertreter: Kiwit, Benedikt

(56) Entgegenhaltungen:
- US-A1- 2004 263 451
- US-A1- 2005 270 798
- US-A1- 2007 223 252
- US-A1- 2013 003 176
- US-A1- 2013 328 780
- US-A1- 2014 043 856
- US-A1- 2014 158 197

## Beschreibung

Die Erfindung betrifft eine Leuchtenanordnung und eine damit ausgestattete Leuchtvorrichtung.

Leuchtenanordnungen an sich sind bekannt. Sie umfassen in der Regel ein Lichtleitteil, das aus einem lichtleitenden Material gebildet und gegebenenfalls mit optischen Strukturen versehen ist, die in der Lage sind, einfallendes Licht gemäß vorbestimmten Abstrahlcharakteristiken zu beeinflussen. Solche Abstrahlcharakteristiken können Strahlenverlauf, Leuchtfarbe, Helligkeit und dergleichen sein. Allerdings besteht hier das Problem, dass für das Erzeugen verschieden beeinflussten Lichts jeweils eine eigene Lichtaustrittsfläche vorgesehen werden muss. Dies ist für Leuchtenanordnungen insbesondere zum Beleuchten von Räumen ungeeignet, die ihr Licht von einer Fläche her in den Raum abgeben müssen. Zudem benötigen mit solchen Lichtleitteilen ausgestattete Leuchten mehr Bauraum insbesondere im Bereich der Lichtaustrittflächen. Es sind zwar grundsätzlich optische Strukturen denkbar, die das Licht von den verschiedenen Austrittsflächen des Lichtleitteils auf eine Lichtaustrittsfläche der Leuchte umleiten könnten, nur ist dies enorm aufwendig, teuer und schwer zu standardisieren, abgesehen von dem dafür notwendigen Bauraum. Für diffuses Licht können nur ovalförmige Leuchtfelder erzeugt werden; die Randbereiche sind schlecht ausleuchtbar. Ferner sind die optischen Elemente wie LED-Platinen, LED-Linsen und dergleichen beispielsweise in Form von Linien oder gar Strukturen von außen für einen Betrachter sichtbar, was ästhetisch ungünstig ist.

Zudem gibt es Lichtleitteile, die mit anderen Elementen wie einer optischen Abdeckung verbunden sind, sodass sich entsprechend Module bilden lassen. Allerdings haben diese Module den Nachteil, dass die Verbindungsstellen zwischen Lichtleitteil und daran angebrachtem Element aufgrund thermischer und/oder mechanischer Belastungen zumindest bereichsweise reißen können. Solche thermischen Belastungen sind hauptsächlich im zueinander unterschiedlichen Ausdehnungsverhalten der Materialien von Lichtleitteil und daran ortsfest angebrachter Abdeckung bei Temperaturveränderungen begründet. Dehnen sich die Materialien unterschiedlich aus, führt dies zu Spannungen im Befestigungsbereich von Lichtleitteil und Element. Insbesondere übliche Klebeverbindungen sind anfällig. Dieses Problem wird umso größer, je größer die Flächen sind, über die das Lichtleitteil am jeweiligen Element angebracht ist. Abgesehen davon, können auch Alterungsprozesse im Material des Klebers zu einem Reißen der Klebeverbindung führen.

Linsenblockraster lassen sich nicht gut fertigen, da die Verbindungsstellen zu angrenzenden Lichtleitelementen ab einer gewissen Länge der Verbindungsfläche insbesondere aufgrund thermischen Ausdehnungsverhaltens der aneinander geklebten Materialien aufreißen können. Zudem kann es zu materialbedingtem Ausdehnungsverhalten kommen, wie beispielsweise aufgrund von Wasseraufnahme oder -abgabe, Alterungsprozessen im Material (Versprödung usw.), Schrumpfung. In all diesen Fällen können die Verbindungen ebenfalls zumindest teilweise aufreißen. Eine andere Ursache hierfür sind mechanische Einflüsse, wie sie beispielsweise in Form von Erschütterungen aufgrund von Transport oder Montage auftreten können. Ein anderer Faktor ist die Größe der Leuchten selbst. Flache, großflächige Leuchten sind wenig torsionssteif und können leicht verbiegen und sich bei einem einseitigen Halten wölben. Dadurch können auch hier - ähnlich wie beim Ausdehnen - die Verbindungsstellen reißen; der Verbund reißt auf. Die Verbindungsstellen zwischen gefügten Teilen sind nicht flexibel, was angreifende Kräfte teilweise aufgrund der Hebelwirkung insbesondere bei großflächigen oder langen Leuchten gegen nahezu unendlich gehen lässt, was jede Verbindung irgendwann überfordert. Zudem sind solche Teile als Spritzteil nicht in einem Stück oder nur in relativ kleiner Baugröße und einreihig herstellbar. Eine Mikropyramidenoptik (MPO) zur Lichtbeeinflussung hat zudem den Nachteil, dass es keine ebenen, transparenten Flächen gibt; sie wirkt nicht "brillant", was ästhetisch ungünstig ist. Zudem sind bei seitlicher Lichteinkopplung sowohl Lichtauskoppelstrukturen im Lichtleiter als auch bei "Durchlicht" eine Diffusorfolie zur Auflösung des Lichts von LEDs sichtbar. Auch ist eine Serienfertigung kaum möglich.

US 2005/0270798 A1 offenbart eine Leuchtenanordnung mit einem flächigen Lichtleitteil und einem mit einer Lichtauskopplungsseite des Lichtleitteils in flächigem Kontakt stehenden optischen Element, wobei das flächige Lichtleitteil Lichtleitstrukturen aufweist, die einen Reflexionsabschnitt und auf dem Reflexionsabschnitt angeordnete optische Umlenkstrukturen zur Lichtverteilung des einfallenden Lichts in der horizontalen Ebene umfassen.

Aufgabe der Erfindung ist es, den Nachteilen des Standes der Technik zu begegnen.

Diese Aufgabe wird mittels des Gegenstands der unabhängigen Ansprüche gelöst. Vorteilhafte Weiterbildungen sind in den Unteransprüchen angegeben.

Erfindungsgemäß ist eine Leuchtenanordnung vorgesehen, die ein flächiges Lichtleitteil aufweist. Das Lichtleitteil umfasst einen ersten Lichteinkopplungsabschnitt, einen zu dem ersten Lichteinkopplungsabschnitt verschiedenen, zweiten Lichteinkopplungsabschnitt und eine Lichtauskopplungsseite. Wenigstens der erste, vorzugsweise aber jeder der Lichteinkopplungsabschnitte ist vorzugsweise jeweils auf wenigstens einer Stirnseite des Lichtleitteils vorgesehen. Jeder Lichteinkopplungsabschnitt kann folglich auf einer oder mehreren Stirnseiten des Lichtleitteils vorgesehen sein, wobei die Stirnseiten der verschiedenen Lichteinkopplungsabschnitte vorzugsweise verschieden voneinander sind und ferner vorzugsweise sich nicht einander gegenüberstehen bezüglich des Lichtleitteils. Die Lichtauskopplungsseite ist auf einer flächigen Seite des Lichtleitteils vorgesehen, insbesondere auf einer Außenseite ausgebildet. Ferner weist die erfindungsgemäße Leuchtenanordnung ein optisches Element, das teilweise in flächigem Kontakt mit der Lichtauskopplungsseite steht, und eine Lichtaustrittsfläche auf. Die Lichtaustrittsfläche ist auf einer der Lichtauskopplungsseite abgewandten und dieser gegenüberliegenden Seite des optischen Elements angeordnet. Die Leuchtenanordnung weist ferner Lichtleitstrukturen auf. Die Lichtleitstrukturen sind so angeordnet und gestaltet, dass sie in den ersten Lichteinkopplungsabschnitt von außen einfallendes Licht optisch nicht beeinflussen. Dadurch tritt über diesen ersten Lichteinkopplungsabschnitt einfallendes Licht gemäß einer ersten Abstrahlcharakteristik über den Kontaktbereich zwischen dem Lichtleitteil und dem optischen Element über die Lichtauskopplungsseite aus dem Lichtleitteil und über einen ersten definierten Bereich der Lichtaustrittsfläche nach außen aus der Leuchtenanordnung aus. Das austretende Licht hat also eine erste Abstrahlcharakteristik inne, die sich beispielsweise durch den Strahlenverlauf des austretenden Lichts definiert. In den zweiten Lichteinkopplungsabschnitt von außen einfallendes Licht hingegen beeinflussen die Lichtleitstrukturen optisch so, dass das über den zweiten Lichteinkopplungsabschnitt einfallende Licht gemäß einer zweiten Abstrahlcharakteristik über dieselbe Lichtauskopplungsseite aus dem Lichtleitteil und über einen zweiten definierten Bereich der Lichtaustrittsfläche, der sich wenigstens teilweise mit dem ersten definierten Bereiche überdeckt, nach außen aus der Leuchtenanordnung austritt. Die Abstrahlcharakteristiken sind vorzugsweise zueinander unterschiedlich. Mit dieser Ausgestaltung ist es möglich, in die Leuchtenanordnung verschieden eingeleitetes Licht an ein und derselben Lichtaustrittsfläche austreten zu lassen. Der Begriff "Bereich" ist dabei der Teil der Lichtaustrittsfläche, durch den das Licht nach außen in Bezug auf die Leuchtenanordnung dringt, also funktional der jeweilige Durchtrittsbereich des Lichts. Die gemeinsame Lichtaustrittsfläche ermöglicht mithin ein Umschalten zwischen mehreren Beleuchtungsmodi, die durch die Abstrahlcharakteristiken einzeln oder in Kombination miteinander bestimmt werden, was die Einsatzflexibilität erhöht.

Zudem ermöglicht dies den Einsatz insbesondere flach bauender Leuchtvorrichtungen, wie sie beispielsweise bei Deckenmontage vorkommen.

Die Lichtleitstrukturen umfassen einen Reflexionsabschnitt und optische Umlenkstrukturen. Der Reflexionsabschnitt ist auf einer der Lichtauskopplungsseite abgewandten Seite des Lichtleitteils angeordnet. Die Umlenkstrukturen sind so angeordnet und gestaltet, dass zumindest vom zweiten Lichteinkopplungsabschnitt einfallendes Licht zum Reflexionsabschnitt umgelenkt wird. Dies erfolgt derart, dass der Reflexionsabschnitt das ankommende, umgelenkte Licht in Richtung Lichtauskopplungsseite reflektiert, sodass das reflektierte Licht über die Lichtauskopplungsseite nach außen aus dem Lichtleitteil austritt. Dies ermöglicht eine besonders flach bauende Weise für die Leuchtenanordnung, da das Licht hinsichtlich der Lichtaustrittsfläche senkrecht bzw. seitlich eingeleitet werden kann. Es können mithin beispielsweise LED-Reihen als Leuchtmittel verwendet werden, die die Leuchtenanordnung und darüber den jeweiligen Raum beleuchten, und zwar über eine einzige Lichtaustrittsfläche.

Der Reflexionsabschnitt kann dabei Ausnehmungen für Indirektlicht aufweisen. D. h. das umgelenkte Licht tritt zum Teil an der der Reflexionsseite des Reflexionsabschnitts zugewandten Seite aus dem Reflexionsabschnitt aus der Leuchtenanordnung heraus, was die Einsatzflexibilität der Leuchtenanordnung erhöht.

Die vorgenannten Lichteinkopplungsabschnitte sind vorzugsweise auf Stirnseiten des Lichtleitteils vorgesehen, die aneinander anstoßen, und schließen einen spitzen, rechten oder stumpfen Winkel ein. Alternativ liegen die Lichteinkopplungsabschnitte jeweils in einer Ebene, wobei die Ebenen der unterschiedlichen Lichteinkopllungsabschnitte einen spitzen, rechten oder stumpfen Winkel einschließen; mithin also die Ebene(n) der ersten Lichteinkopplungsabschnitte und die Ebene(n) der zweiten Lichteinkopplungsabschnitte einen spitzen, rechten oder stumpfen Winkel zueinander einschließen. Dadurch können für die verschiedenen Abstrahlcharakteristiken verschieden angeordnete Leuchtmittel angeordnet werden. Dies ermöglicht zudem den Einsatz verschiedener Leuchtmittel.

Vorzugsweise ist zumindest einer der Lichteinkopplungsabschnitte mittels zweier, einander gegenüberliegender Stirnseiten des Lichtleitteils gebildet. Die Lichtleitstrukturen sind in dem Fall zwischen den jeweils einander gegenüberliegenden Stirnseiten des Lichteinkopplungsabschnitts angeordnet, der mittels ebenjener zwei Stirnseiten gebildet ist. Dies hat den Vorteil, dass das Licht für die zu dem jeweiligen Lichteinkopplungsabschnitt gehörende Abstrahlcharakteristik nur von einer oder von beiden Stirnseiten gleichzeitig in das Lichtleitteil eingeleitet werden kann. Die dafür vorzusehenden Leuchtmittel können reflektierend ausgebildet sein, sodass das von der anderen Stirnseite her einfallende Licht in das Lichtleitteil zurück reflektiert wird. Somit wird der Wirkungsgrad erhöht, und spezielle Reflexionsstrukturen sind nicht erforderlich. Alternativ dazu kann nur ein Lichteinkopplungsabschnitt genutzt werden. Haben die zu dieser Stirnseite gehörenden Leuchtmittel eine Fehlfunktion, wie dies mittels einer Sensorschaltung erfasst werden kann, kann diese die zur anderen Stirnseite gehörenden Leuchtmittel zuschalten und ggf. die nicht richtig funktionierenden Leuchtmittel abschalten. Dies erhöht die Betriebssicherheit.

Vorzugsweise umfasst die erste Abstrahlcharakteristik ein Austreten gerichteten Lichts und die zweite Abstrahlcharakteristik ein Austreten diffusen Lichts. D. h. bei Nutzung des ersten Lichteinkopplungsabschnitts kann mittels einer mit dieser Anordnung ausgestatteten Leuchtvorrichtung ein Raum ausgeleuchtet werden. Alternativ oder zusätzlich dazu kann dieselbe Leuchtvorrichtung über dieselbe Lichtaustrittsfläche einen bestimmten Bereich des Raums speziell beispielsweise verstärkt, vorzugsweise spotartig beleuchten. Es ergeben sich somit vielfältige Einsatzmöglichkeiten.

Die vorgenannten Lichtleitstrukturen umfassen vorzugsweise zumindest eine lentikulare Struktur, die sich im Wesentlichen senkrecht zum ersten Lichteinkopplungsabschnitt und im Wesentlichen parallel zum zweiten Lichteinkopplungsabschnitt erstreckt. Dabei beide Lichteinkopplungsabschnitte zwangsläufig Flächen bzw. Seiten haben müssen, durch die hindurch das Licht in den jeweiligen Lichteinkopplungsabschnitt eingeleitet wird, bedeutet bezieht sich im Rahmen der Erfindung senkrecht und parallel auf die Ebene, die von der jeweiligen Fläche bzw. Seite des entsprechenden Lichteinkopplungsabschnitts aufgespannt wird. Lentikulare Strukturen sind sehr einfach herzustellende optische Strukturen, die beispielsweise die Form von Rillen haben können. Zudem ermöglicht solch eine Struktur die Ausbildung eines sonst im Wesentlichen flach bauenden, beispielsweise blockartigen Lichtleitteils, das in oder an einer korrespondierenden Aufnahme befestigt und beispielsweise mittels Einschiebens montiert werden kann.

Weist die Leuchtenanordnung mehrere lentikulare Strukturen auf, nehmen diese vorzugsweise von dem zweiten Lichteinkopplungsabschnitt aus gesehen wenigstens bis zur Mitte des Lichleitteils hin im Querschnitt derart in ihrer Größe zu, dass über den Querschnitt jeder lentikularen Struktur eine homogene Lichtauskopplung von diffusem Licht in Richtung Lichtauskopplungsabschnitt stattfinden kann, wenn Licht in den zweiten Lichteinkopplungsabschnitt einfällt. D. h. die mittlere lentikulare Struktur weist einen größeren Querschnitt bzw. eine größere Querschnittsfläche auf als die rechts und links davon angeordneten lentikularen Strukturen. Dies ist eine sehr einfache Methode, die Erzeugung homogenen Lichts zu realisieren, was zu einem ästhetisch günstigen Lichtaustrittsfeld führt. Dies ist auch in der Hinsicht vorteilhaft, da durch diese Ausgestaltung insbesondere innere Strukturen bzw. Elemente wie punktuell leuchtende LEDs, die im Strahlenverlauf des Lichts hinter der lentikularen Struktur liegen, optisch unsichtbar werden. Aber auch die anderen Lichtauskoppelstrukturen wie die lentikularen Strukturen selbst sind nicht sichtbar. Dies ergibt einen ästhetisch angenehmen Gesamteindruck der so bildbaren Leuchtvorrichtung.

Die zumindest eine lentikulare Struktur ist vorzugsweise mittels einer an/in der Lichtauskopplungsseite des Lichleitteils ausgebildeten rillenartigen Ausnehmung gebildet. Solch eine Struktur kann sehr einfach bei der Herstellung beispielsweise mittels Extrusion oder Druckgusses hergestellt oder im Nachhinein mittels Fräsens hergestellt werden. Noch einfacher wird dies, wenn die Rillen durchgehend ausgebildet sind. In dem Fall kann das Lichtleitteil als Endlosstrang hergestellt und entsprechend des jeweiligen Einsatzfalls abgelängt werden, was die Herstellung weiter vereinfacht und verbilligt. Dadurch ist eine Serienfertigung sehr einfach möglich.

Jede der vorgenannten lentikulare Strukturen schließt vorzugsweise seitlich mit einem der zwei Lichteinkopplungsabschnitte bündig ab. Dadurch wird eine etwaige Nichtnutzung von in ebenjenem Angrenzungsbereich zwischen Lichteinkopplungsabschnitt und lentikularer Struktur einfallendem Licht weitestgehend vermieden, was der Lichtausbeute zugute kommt. Ferner kann dadurch vermieden werden, dass einfallendes Licht nicht den gewünschten Verlauf durch die Leuchtenanordnung nimmt und mit falscher Abstrahlcharakteristik die Leuchtenanordnung verlassen könnte. Dadurch wird die Betriebssicherheit verbessert. Zudem kann dadurch der Lichtanteil verringert werden, der bei Erzeugung insbesondere diffusen Lichts in das optische Element gelangt.

Der Querschnitt der vorgenannten lentikularen Strukturen kann insgesamt oder teilweise rund, halbkreisförmig, dreieckig, spitz, stumpf, vieleckig oder oval sein, je nachdem, wie die jeweilige Abstrahlcharakteristik sein soll. Dadurch ist die Leuchtenanordnung an verschiedenste Einsatzmöglichkeiten einfach anpassbar. Die lentikulare Struktur kann beispielsweise am Lichtleitteil ausgebildet werden, das seinerseits in verschiedenen Ausführungen, aber vorteilhafterweise mit identischen Außenabmessungen, hergestellt werden kann.

Die Leuchtenanordnung bzw. das Lichtleitteil weist vorzugsweise wenigstens zwei flächige Lichtleitelemente auf. Ein erstes dieser Lichtleitelemente umfasst die vorgenannte Lichtauskopplungsseite. Ein zweites dieser Lichtleitelemente ist auf der der Lichtauskopplungsseite abgewandten Seite des ersten Lichtleitelements angeordnet ist. Ferner kann auf wenigstens einer Stirnseite dieses ersten Lichtleitungselements der erste Lichteinkopplungsabschnitt vorgesehen sein. Auf wenigstens einer Stirnseite des zweiten Lichtleitelements kann dann der zweite Lichteinkopplungsabschnitt vorgesehen sein. Dies ermöglicht, die Lichteinkopplungsabschnitte an Stirnseiten der Lichtleitelemente vorzusehen, die in ein und dieselbe Richtung weisen. Dadurch können Leuchtmittel beispielsweise in zwei Reihen auf einer einzigen Platine angeordnet werden. Eine Reihe strahlt ihr Licht in Richtung ersten Lichteinkopplungsabschnitt ab, und die zweite Reihe strahlt ihr Licht in Richtung zweiten Lichteinkopplungsabschnitt ab. D. h. es ist nur eine einzige Leuchtmittelvorrichtung oder-anordnung nötig, um beide Abstrahlcharakteristiken realisieren zu können.

Der erste Lichteinkopplungsabschnitt ist vorzugsweise auf einer Stirnseite des Lichtleitteils vorgesehen. Der zweite Lichteinkopplungsabschnitt ist entweder auf einer der Lichtauskopplungsseite abgewandten Seite des Lichtleitteils oder ebenfalls auf einer Stirnseite des Lichtleitteils vorgesehen, die von der den ersten Lichteinkopplungsabschnitt aufweisenden Stirnseite und vorzugsweise ferner einer dem ersten Lichteinkopplungsabschnitt gegenüberliegenden Stirnseite verschieden ist. Die Anordnung an der abgewandten Seite ermöglicht den Verzicht auf einen Reflektor an dieser Seite, um das in den zweiten Lichteinkopplungsabschnitt eingeleitete Licht in Richtung Lichtauskopplungsseite zu reflektieren. Die Anordnung an einer Stirnseite hingegen erlaubt eine besonders flach bauende Leuchtvorrichtung, was den Einsatz insbesondere an Raumdecken und den optischen Eindruck verbessert, wenn die Leuchtvorrichtung auf eine Decke oder Wand aufgesetzt ist.

Die genannten Lichtleitstrukturen können einen Diffusor vorzugsweise in Form einer Diffusorfolie aufweisen, der auf einer der Lichtauskopplungsseite abgewandten Seite des Lichtleitteils und/oder zwischen zwei Lichtleitelementen des Lichtleitteils angeordnet ist. Diese Ausgestaltung ermöglicht den Verzicht auf lentikulare Strukturen, Zudem ist es dadurch möglich, Licht in Richtung Lichtaustrittsfläche derart in die Lichteinkopplungsabschnitte zu leiten, dass das diffus auszustrahlende Licht den Diffusor passieren muss, das nicht diffus auszustrahlende Licht hingegen nicht.

Weist das Lichtleitteil die vorgenannten zwei Lichtleitelemente auf, ist an dem ersten Lichtleitelement vorzugsweise die Lichtauskopplungsseite ausgebildet. Die Lichtleitelemente sind zueinander beabstandet anordenbar. Zwischen den beiden Lichtleitelementen befindet sich ein in Bezug auf das erste Lichtleitelement optisch dünneres Material. Dadurch ist es möglich, in den ersten Lichteinkopplungsabschnitt Licht einzuleiten, das an der dem zweiten Lichtleitelement zugewandten Seite des ersten Lichtleitelements in dieses zurück totalreflektiert wird. Das Material kann Luft sein, wobei die Lichtleitelemente vorzugsweise mittels Abstandhaltern zueinander im Abstand gehalten sind. Oder aber ein dort befindlicher Diffusor oder ein sonstiges Element beispielsweise aus transparenten Silikon ist dort angeordnet. Silikon hat den Vorteil, dass es an die beiden Lichtleitelemente anlaminiert werden kann und so neben der optischen Funktion zugleich eine flexible Verbindung zwischen den beiden Lichtleitelementen schafft. Dadurch können thermisches Ausdehnungsverhalten und/oder mechanische Einflüsse wie Erschütterungen zwischen den Lichtleitelementen bis zu einem bestimmten Maß ausgeglichen werden. Dies hat ferner den Vorteil, dass auf Kleber verzichtet werden kann, was sonst die vorgenannten Probleme hinsichtlich alterungsbedingten Reißens der Verbindung nicht mehr auftreten. Zudem ermöglicht dies den Einsatz großflächiger Lichtleitelemente. Alternativ oder zusätzlich dazu kann zwischen dem Diffusor ein in Richtung Lichtauskopplungsseite lichtreflektierendes Reflektorelement vorgesehen sein, oder der Diffusor selbst ist an seiner dem ersten Lichtleitelement zugewandten Seite reflektierend ausgebildet. Beides führt dazu, dass auf das optisch dünnere Material verzichtet werden kann, was sich günstig auf die Bauhöhe der Leuchtenanordnung auswirkt. Zudem kann das über den ersten Lichteinkopplungsabschnitt einfallende Licht nicht ungewollt den Diffusor passieren und so zu einem ungewollt austretenden diffusen Licht werden, was die Betriebssicherheit erhöht.

Vorzugsweise ist der Diffusor teilweise offen, ist also mit einem Durchlicht versehbar. Dadurch kann der Diffusor mit einer der Lichtauskopplungsseite abgewandten Seite den zweiten Lichteinkopplungsabschnitt des Lichtleitteils bilden. Es ist somit möglich, den Rest der Leuchtenanordnung für beide Abstrahlcharakteristiken zu nutzen, was den Aufbau einfach macht und die Anzahl an Strukturen und/oder Elementen und somit die Kosten niedrig hält. Alternativ kann der Diffusor in Richtung zweiten Lichteinkopplungsabschnitt weisen. Dadurch ist keine Umlenkung des in den zweiten Lichteinkopplungsabschnitt einfallenden Lichts bis zum Erzeugen des diffusen Lichts nötig; die für das Leiten des Lichts in Richtung Lichtaustrittsfläche zuständige(n) Lichtleitstruktur(en) sind wieder für beide Abstrahlcharakteristiken vorgesehen. Auch ermöglicht dies das Austretenlassen von Licht, das immer einen diffusen Anteil hat. Nicht zuletzt kann dadurch eine indirekte Beleuchtung bereitgestellt werden, wobei eine zweite Lichtaustrittsseite auf der dem Lichtankopplungsteil abgewandten Seite des Diffusors angeordnet ist.

Vorzugsweise weist das vorgenannte optische Element ein optisches Linsenelement vorzugsweise in Form eines Linsenblockrasterelements auf. Diese Ausführung ist besonders für Leuchtvorrichtungen mit großflächigen Leuchtflächen geeignet. Linsenblockmatten sind zudem einfach und kostengünstig herzustellen und bieten dennoch den Vorteil des Austretenlassens eines homogenen Lichts aus der Leuchtenanordnung. Die Lichtleitstrukturen können zudem oder alternativ über zumindest ein optisches Linsenelement verfügen. Dies ermöglicht, die Lichtleitung genau auf die Anforderungen vor Ort einstellen zu können. Zusätzliche Elemente sind nicht erforderlich, was den Einsatz beispielsweise bei flach bauenden Leuchtvorrichtungen ermöglicht. Vorzugsweise weisen die Lichtleitstrukturen mehrere Linsenelemente auf, die in einer oder mehreren Reihen angeordnet sind. Dies ermöglicht die Ausgestaltung der Leuchtenanordnung so, dass sie in einem Bereich der Lichtaustrittsfläche beispielsweise Licht gesammelt abstrahlt, wohingegen das Licht in einem anderen Bereich großflächig austreten kann.

Die Leuchtenanordnung kann ferner ein lichtdurchlässiges Abdeckelement aufweisen, welches auf der dem Lichleitteil abgewandten Ende des optischen Elements vorgesehen ist, vorzugsweise mit dem optischen Element integral ausgebildet ist, und ferner vorzugsweise die Lichtaustrittsfläche aufweist. Dieses dient unter anderem dem (mechanischen) Schutz des optischen Elementes.

Ferner ist erfindungsgemäß eine Leuchtenanordnung vorgesehen, die ein lichtdurchlässiges Abdeckelement, eines der vorgenannten Lichtleitelemente, also wenigstens mit einem Lichteinkopplungsabschnitt, und ein optisches Element aufweist. Das optische Element ist vorzugsweise ein Linsenblockrasterelement. Das optische Element ist zwischen dem Abdeckelement und dem Lichtleitelement angeordnet und mit diesen verbunden. Ferner ist zwischen dem Lichtleitteil einerseits und dem Abdeckelement anderseits ein flexibles Verbindungselement wenigstens auf Seiten des Abdeckelements vorgesehen. Dies ermöglicht die Verwendung von zueinander verschiedenen Materialien für das Abdeckelement und das optische Element. Diese Materialien können damit auf die jeweilige Funktion des Abdeckelements wie mechanischer Schutz und des optischen Elements wie gute Lichtdurchlässigkeit hin optimiert werden; es muss kein Augenmerk auf ein etwaiges unterschiedliches thermisches Ausdehnungsverhalten der Materialien geachtet werden. Zudem können dadurch mechanische Einflüsse auf die Leuchtenanordnung zumindest bis zu einem vorbestimmten Maß abgefangen werden, ohne dass sich die vorgenannte Verbindung löst oder teilweise aufreißt. Solche Belastungen können durch Transport und damit einhergehende Erschütterungen oder auch nach der eigentlichen Montage beispielsweise aufgrund von Bauarbeiten entstehen. Diese Lösung verbessert also die Lebensdauer der gesamten Anordnung, und zwar insbesondere bei einer großflächigen Leuchtenanordnung mit einer entsprechend großen Verbindungsfläche zwischen optischem Element und Abdeckelement.

Die Verbindung erfolgt vorzugsweise, indem das optische Element aus einem lichtdurchlässigen und flexiblen Material gebildet ist, mittels dessen das optische Element als das Verbindungselement am Abdeckelement und am Lichtleitelement befestigt ist. D. h. das optische Element sorgt selbst für die vorgenannte flexible Verbindung. Dadurch können das Lichtleitteil und das Abdeckelement aus formbeständigem Material gebildet werden. Die für das Abdeckelement und das Lichtleitteil verwendeten Materialien können zueinander unterschiedlich sein. Alternativ oder zusätzlich dazu kann das Verbindungselement separat vorgesehen sein, welches aus einem lichtdurchlässigen und flexiblen Material gebildet und zudem sowohl am optischen Element einerseits als auch am Abdeckelement bzw. am Lichtleitteil andererseits befestigt ist. Dadurch kann auch das optische Element aus formstabilem Material gebildet sein, und trotzdem bleiben die genannten Vorteile aufgrund der flexiblen Verbindung erhalten.

Das Material für die Verbindung ist vorzugsweise ein optisches Silikon, das einfach und preisgünstig herzustellen ist. Zudem ist dieses Material bezüglich thermischer Einflüsse weniger anfällig ist als eine starre Klebeverbindung.

Die vorgenannte Befestigung zwischen beispielsweise optischem Element und Lichtleitelement erfolgt im Fall des Silikonmaterials vorzugsweise mittels Laminierens, was eine sehr einfach herzustellende und wirksame Befestigung darstellt. Dies betrifft die Befestigung zwischen optischem Element und Lichtleitteil und/oder Abdeckelement.

Das Material des optischen Elements kann seinerseits optische Lichtbeeinflussungselemente wie Linsen und dergleichen einschließen bzw. aufweisen. Dies ermöglicht, das optische Element selbst blockartig ausbilden zu können, da die optische Funktion von den enthaltenen optischen Lichtbeeinflussungselementen übernommen wird. Dies erhöht die Stabilität der gesamten Anordnung. Solche Lichtbeeinflussungselemente können beispielsweise eingeschlossene Partikel sein.

Jede der Leuchtenanordnungen mit flexibler Verbindung kann zudem ausgebildet sein, verschiedene Abstrahlcharakteristiken zu realisieren, wie vorstehend angegeben. Somit sind alle vorgenannten Vorteile mit ein und derselben Anordnung erreichbar.

Erfindungsgemäß ist ferner eine Leuchtvorrichtung vorgesehen. Diese Vorrichtung kann als Leuchte, Optik, Halterahmen und/oder Lichtleiterplatte ausgebildet sein. Die Leuchtvorrichtung weist erfindungsgemäß ein Leuchtmittel und eine der vorgenannten Leuchtenanordnungen auf. Das bzw. die Leuchtmittel ist bzw. sind zum Einkoppeln von Licht über zumindest einen der Lichteinkopplungsabschnitte oder zumindest einen des wenigstens einen Lichteinkopplungsabschnitts des Lichtleitteils der Leuchtenanordnung vorgesehen. D. h. das bzw. die Leuchtmittel und das Lichtleitelement sind so angeordnet, dass das bzw. die Leuchtmittel sein bzw. ihr Licht in Richtung Lichtleitelement abstrahlt bzw. abstrahlen. Die Abstrahlung erfolgt derart, dass das abgestrahlte Licht so umgeleitet wird, dass es an der Lichtaustrittsseite nach außen aus der Leuchtenanordnung austritt. D. h. lediglich mittels Vorsehens der Leuchtenanordnung kann die erfindungsgemäße Wirkung erlangt werden. Die Leuchtenanordnung ist somit in jede Art von Leuchtvorrichtung integrierbar.

Vorzugsweise ist jeder der Lichteinkopplungsabschnitte wenigstens ein Leuchtmittel zugeordnet. Weist die Leuchtenanordnung die vorgenannten Lichteinkopplungsabschnitte auf, sind das bzw. die Leuchtmittel und das Lichtleitelement so angeordnet, dass das bzw. die Leuchtmittel Licht in einen der zwei Lichteinkopplungsabschnitte abstrahlt bzw. abstrahlen. Dies erfolgt derart, dass das abgestrahlte Licht gemäß der Abstrahlcharakteristik, die dem angestrahlten Lichteinkopplungsabschnitt entspricht bzw. unter Nutzung dieses Abschnitts realisiert wird, über den zugehörigen, vorstehend angegebenen ersten oder zweiten definierten Bereich der Lichtaustrittsfläche nach außen aus der Leuchtenanordnung austritt. Je nach Einbau der Leuchtenanordnung kann damit die eine oder die andere Abstrahlcharakteristik erlangt werden. Vorzugsweise kann die Leuchtvorrichtung auch ein anderes Leuchtmittel aufweisen. Dieses andere Leuchtmittel und das Lichtleitelement sind erfindungsgemäß dann so angeordnet, dass das andere Leuchtmittel sein Licht nun in den anderen der zwei Lichteinkopplungsabschnitte derart abstrahlt, dass das abgestrahlte Licht gemäß der diesem anderen Lichteinkopplungsabschnitt entsprechenden Abstrahlcharakteristik über den jeweils zugehörigen zweiten oder ersten definierten Bereich der Lichtaustrittsfläche nach außen aus der Leuchtenanordnung austritt. D. h. hier kann zwischen den zwei Abstrahlcharakteristiken gewählt werden. Oder sie werden miteinander kombiniert, was die Einsatzflexibilität im Montagezustand erhöht.

Jede der genannten Leuchtvorrichtungen kann als Leuchte mit direkter und/oder indirekter Beleuchtung ausgebildet sein, was beispielsweise den Einsatz als Wandleuchte ermöglicht.

Jede der genannten Leuchtvorrichtungen kann zudem Diffusfelder und/oder zusätzliche Lichtauskoppelstrukturen aufweisen. Dies ermöglicht, dass die Leuchtvorrichtung neben den Abstrahlcharakteristiken in der Lage ist, Licht noch in anderer Weise, beispielsweise in anderer Farbe, auszustrahlen.

Jede der vorgenannten Leuchtvorrichtungen kann über zwei einander gegenüberliegende Lichtaustrittsflächen verfügen. Das Lichtleitteil ist ausgebildet, das einfallende Licht so umzuleiten, dass das Licht gemäß der jeweiligen Abstrahlcharakteristik aus beiden Lichtaustrittsflächen nach außen aus der Leuchtvorrichtung austritt. Es sind damit verschiedenartige Beleuchtungsszenarien möglich, beispielsweise in Form zweier Spotlichter.

Jede der vorgenannten Leuchtvorrichtungen kann mehrere Leuchtmittel aufweisen, die in einer oder mehreren Reihen so angeordnet sind. Es sind somit beispielsweise LED-Leisten anwendbar. Aufgrund des möglichen diffusen Austrittslichts entsteht weiterhin der Eindruck einer Leuchtvorrichtung mit einem flächigen Leuchtmittel.

Weitere Merkmale und Vorteile der Erfindung ergeben sich aus der nachfolgenden Beschreibung bevorzugten Ausführungsformen der Erfindung. Es zeigen:
- Figur 1: eine Leuchtenanordnung gemäß einer ersten Ausführungsform der Erfindung in zwei Ansichten,
- Figur 2: eine Leuchtenanordnung gemäß einer zweiten Ausführungsform der Erfindung in verschiedenen Ansichten,
- Figur 3: eine Leuchtenanordnung gemäß einer dritten Ausführungsform der Erfindung in verschiedenen Ansichten,
- Figur 4: eine Leuchtenanordnung gemäß einer vierten Ausführungsform der Erfindung in zwei Ansichten,
- Figur 5: eine Leuchtenanordnung gemäß einer fünften Ausführungsform der Erfindung in verschiedenen Ansichten,
- Figur 6: eine Leuchtenanordnung gemäß einer sechsten Ausführungsform der Erfindung in verschiedenen Ansichten und
- Figur 7: eine Leuchtvorrichtung gemäß einer Ausführungsform der Erfindung in verschiedenen Ansichten.

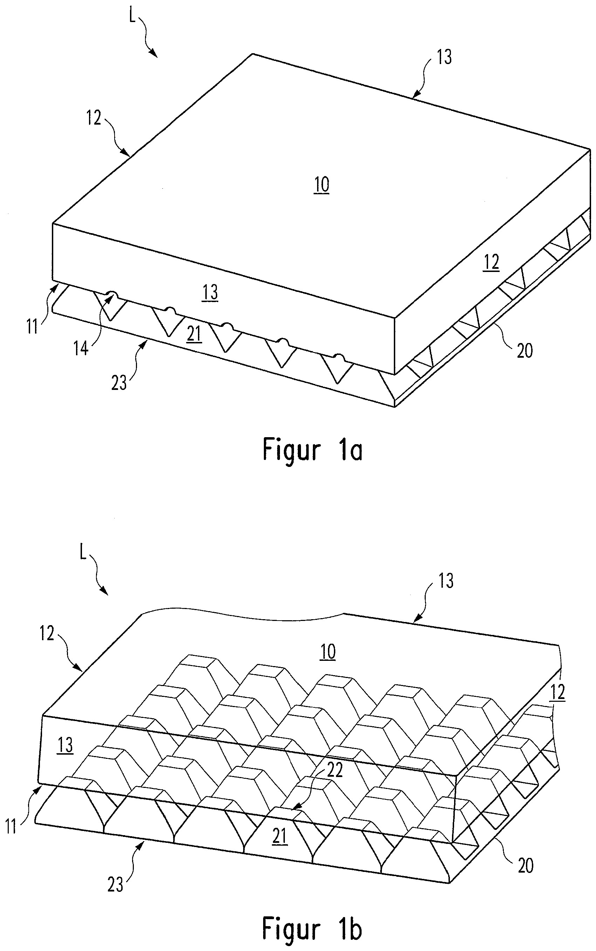

Figur 1 zeigt eine Leuchtenanordnung gemäß einer ersten Ausführungsform der Erfindung. Die Anordnung weist ein flächiges Lichtleitteil 10 auf, das im Wesentlichen quaderförmig ausgebildet ist. Es ist anzumerken, dass das Lichtleitteil 10 nicht auf diese Form beschränkt ist, solange es die Eigenschaften eines Lichtleiters erfüllt. Das Lichtleitteil 10 weist jeweils wenigstens eine, hier gezeigt bevorzugt zwei vorzugsweise einander gegenüberliegende erste Lichteinkopplungsabschnitte 13 und zweite Lichteinkopplungsabschnitte 12 auf. Die veschiedenen Lichteinkopplungsabschnitte stoßen hier aneinander an und schließen einen Winkel von ca. 90° ein. Grundsätzlich ist es vorteilhaft, wenn die Lichteinkopplungsabschnitte 12, 13 jeweils in einer Ebene liegen, die einen spitzen, rechten oder stumpfen Winkel einschließen. Die Lichteinkopplungsabschnitte 12, 13 sind vorzugsweise an entsprechenden Stirnseiten des Lichtleitteils 10 vorgesehen und vorzugsweise jeweils durch eine oder mehrere entsprechende Stirnseiten (oder Teilbereichen davon) gebildet. Im Folgenden werden die Lichteinkopplungsabschnitte daher auch als Lichteinkopplungsseiten bezeichnet.

Über die zweiten Lichteinkopplungsseiten 12 einfallendes Licht ist vorgesehen, in Richtung einer Lichtauskopplungsseite 11 des Lichtleitteils 10 und aus der Leuchtenanordnung diffus abzustrahlen. Über die ersten Lichteinkopplungsseiten 13, 13 einfallendes Licht ist vorgesehen, als gerichtetes Licht aus der Leuchtenanordnung abgestrahlt zu werden. Um diese unterschiedlichen Abstrahlcharakteristiken für das einfallende Licht zu erfüllen, sind gemäß der ersten Ausführungsform an der Lichtauskopplungsseite 11 rillenartige lentikulare Strukturen 14 ausgebildet, die hier im Querschnitt halbrund ausgebildet sind. Die lentikularen Strukturen sind beispielhaft mittels rillenartiger Nuten im Lichtleitteil 10 ausgebildet, die exemplarisch einen halbkreisartigen oder auch einen andersartigen Querschnitt aufweisen.

Fällt Licht durch die zweite Lichteinkopplungsseite 12 in das Lichtleitteil 10 hinein, wird das Licht mittels Totalreflexion durch das Lichtleitteil 10 geleitet. Trifft das einfallende Licht auf die Strukturen 14, so wird wenigstens ein Teil desselben aus der Lichtauskopplungsseite 11 des Lichtleitteils 10 heraus gebrochen und somit nach unten in Figur 1 abgeleitet. Alternativ oder zusätzlich sind die Strukturen 14 so ausgebildet, dass auf diese treffendes Licht in das Lichtleitteil 10 gelenkt wird und im Wesentlichen zur Rückseite (also der Lichtauskopplungsseite 11 des Lichtleitteils 10 gegenüberliegenden flächigen Seite) gelenkt. Aufgrund des spitzeren Auftreffwinkels kann das Licht an der Rückseite bzw. der hier dargestellten oberen Seite bspw. mittels einer hier nicht dargestellte Reflexionsschicht zurück in Richtung Lichtauskopplungsseite 11 reflektiert werden und durch diese austreten. Aufgrund der Struktur bzw. Geometrie der Strukturen 14 geschieht die Brechnung bzw. Umlenkung ungerichtet, so dass an der Lichtauskopplungsseite 11 diffuses Licht abgestrahlt wird. Dieses austretende Licht wird wenigstens zum Teil durch ein optisches Element 20, im Folgenden auch als Lichtankopplungsteil 20 bezeichnet, hindurchgeführt, das hier in Form vieler, in einer Matrix angeordneter Lichtleitkörper 21 (bspw. also als Linsenblockrasterelement 20) ausgebildet ist. Das Lichtankopplungsteil 20 weist an seiner dem Lichtleitteil 10 abgewandten Seite eine Lichtauskopplungsseite 23 auf, die zugleich der Lichtauskopplungsseite bzw. Lichtaustrittsfläche der gesamten Anordnung entspricht.

Fällt hingegen Licht durch die erste Lichteinkopplungsseite 13 in das Lichtleitteil 10 hinein, wird das einfallende Licht mittels Totalreflexion durch das Lichtleitteil 10 geleitet. Trifft das Licht an Ankoppelstellen des optischen Elements 20 mit dem Lichleitteil 10, mithin also auf eine Stelle, an der einer der Lichtleitkörper 21 die Lichtauskopplungsseite 11 berührt, wird das Licht aus dem Lichtleitteil 10 in Richtung Lichtauskopplungsseite 23 gerichtet herausgebrochen.

Figur 1b zeigt das Lichtleitteil 10 in Verbindung mit dem Lichtankopplungsteil 20 in einer halbtransparenten Darstellung. D. h. hier ist das Lichtankopplungsteil 20 mit seinen Lichtteilkörpern 21 durch das Lichtleitteil 10 hindurch scheinend dargestellt. Hier ist besonders gut die matrixartige Anordnung der Lichtleitkörper 21 erkennbar.

Die pyramidenstumpfartige Form der Lichtleitkörper 21 in Verbindung mit ihren der Lichtauskopplungsseite 11 zugewandten Lichteinkopplungsseiten 22 dient dem Zweck, das Licht über die gesamte Lichtauskopplungsseite 23 so zu verteilen, dass über die gesamte Lichtauskopplungsseite 23 Licht abgestrahlt werden kann. Somit entsteht eine homogene Lichtaustrittsfläche, und für den Betrachter ist nicht erkennbar, dass das Licht von einzelnen Leuchtmitteln, wie LEDs, herrührt.

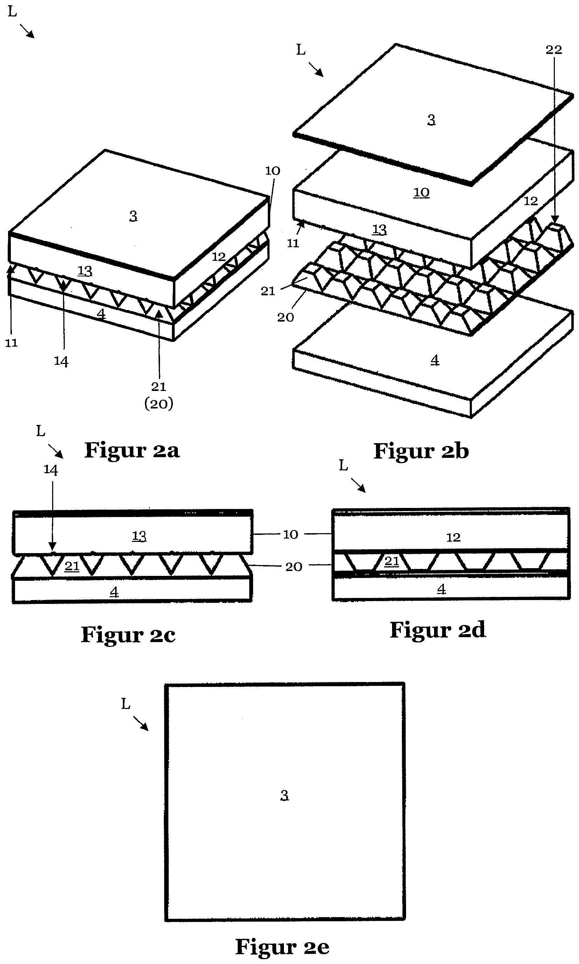

Figur 2 zeigt eine Anordnung gemäß einer zweiten Ausführungsform der Erfindung. Auch hier gibt es wieder ein Lichtleitteil 10 mit vorzugsweise einander gegenüberliegenden Lichteinkopplungsseiten 12, 12 sowie 13, 13, von denen nur die vorderen Lichteinkopplungsseiten mit Bezugszeichen versehen sind. Ferner gibt es wieder das Lichtankopplungsteil 20, das, wie in Figur 2b erkennbar, Lichtleitkörper 21 mit Lichteinkopplungsseiten 22 aufweist, von denen wieder nur eines mit Bezugszeichen versehen ist.

Oberhalb dieser zweischichtigen Anordnung befindet sich eine Platte aus mikrozellulärem Polyethylenterephthalat (MC PET), die als Reflexionsabschnitt 3 dient. Hier unterhalb, d. h. an einer dem Lichtleitteil 10 abgewandten Seite, also der Lichtauskopplungsseite 23 des Lichtankopplungsteils 20, schließt sich eine optische Abdeckung 4 als Abdeckelement an, die vorzugsweise lediglich lichtdurchlässig ist. Sie kann selbstverständlich auch farbig oder in einer anderen Art optisch verändernd wirkend ausgebildet sein. Fällt Licht in eine der Seiten 13,13 ein, wird es durch das Lichtleitteil 10 geleitet und, wenn es auf die Strukturen 14 trifft, insbesondere auch in Richtung Reflexionsabschnitt 3 abgeleitet. Die Reflexionsschicht an der dem Lichtleitteil 10 zugewandten Seite des Reflexionsabschnitts 3 reflektiert das einfallende Licht in Richtung Lichtauskopplungsseite 11 und über die Lichtauskopplungsseite 11 sowie das optische Element 20 und auch Zwischenräume desselben sowie über die Abdeckung 4 nach außen abgestrahlt. Es entsteht an der Lichtauskopplungsseite 23 bzw. der davon abgewandten Fläche der Abdeckung wiederum ein homogenes Lichtfeld. Der Reflexionsabschnitt 3 und die Abdeckung 4 haben zudem den Vorteil, dass sie die Lichtleitkörper 21 optisch besser verdecken können, sodass diese Strukturen für den Betrachter weniger bzw. gar unsichtbar werden, sodass für den Betrachter der Eindruck entsteht, es handle sich um eine einzige Lampe.

Das optische Element bzw. Lichtankopplungsteil 20 stellt vorzugsweise eine Silikonlinsenmatte dar. Dieser Aspekt ist auch unabhängig von dem zuvor beschriebenen eigenständig als erfindungsgemäß zu verstehen. Er hat zum einen den Vorteil, das an der Lichtaustrittsseite 23 austretende Licht vorteilhafterweise homogen aussehen zu lassen. Zum anderen können das Lichtleitteil 10 und die Abdeckung 4 daran anlaminiert werden, was der Befestigungssicherheit zugutekommt. Da Silikonmaterialien an sich flexibel sind, können sich die Elemente 10, 4 gegeneinander bewegen, ohne dass die Verbindung zum Lichtankopplungsteil 20 verloren geht. Solche Bewegungen können von einem zueinander unterschiedlichen thermischen Ausdehnungsverhalten und/oder mechanischen Einflüssen wie Vibrationen herrühren. Dadurch ist das Problem beseitigt, das insbesondere bei großflächigen Teilen die Verbindungsstellen reißen können oder durch thermische bzw. mechanische Spannungen sich von einander lösen können. Dies hat ferner den Vorteil, dass die gesamte Anordnung sehr großflächig aufgebaut werden kann, ohne dass die Gefahr besteht, dass sich die Elemente 10, 4 von einander lösen.

Die Abdeckung 4 ist vorzugsweise transparent, kann aber auch beispielsweise farbig gestaltet sein.

Tritt vorzugsweise gerichtetes Licht exemplarisch durch eine der Lichteinkopplungsseiten 12 bzw. 13 in das Lichtleitteil 10 ein, verlaufen dessen Lichtstrahlen im Wesentlichen parallel oder in sehr spitzen Winkeln zu der hier nach oben weisenden Seite des Lichtleitteils 10. Aufgrund dessen werden die Lichtstrahlen an den vorteilhafterweise polierten Oberflächen des Lichtleitteils 10 zurück in das Lichtleitteil 10 totalreflektiert. Allerdings treffen sie an der gegenüberliegenden Lichteinkopplungsseite 12 bzw. 13 in einem zumindest nahezu rechten Winkel auf und würden aus dem Lichtleitteil 10 herausgebrochen. Damit dies nicht geschieht, kann an der hinteren Lichteinkopplungsseite ein hier nicht abgebildeter Reflexionsabschnitt vorgesehen sein, der die auftreffenden Lichtstrahlen in das Lichtleitteil 10 zurückreflektiert. Alternativ oder zusätzlich sind an dieser Seite ebenfalls Leuchtmittel angeordnet, die ihr (gerichtetes) Licht nunmehr in die andere Lichteinkopplungsseite 12 bzw. 13 abstrahlen und/oder mit einer reflektierenden Fläche versehen sind. In beiden Fällen kann kein oder nur wenig Licht aus dem Lichtleitteil 10 seitlich heraus gelangen. Trifft hingegen das Licht auf eine lentikulare Struktur 14 (wenn über die zweite Lichteinkopplungsseite 12 eingestrahlt) oder an Ankoppelstellen von optischem Element 20 mit Lichleitteil 10 (wenn über die erste Lichteinkopplungsseite 13 eingestrahlt), wird das Licht in vorbeschriebener Weise aus dem Lichtleitteil 10 herausgeführt, in Richtung Lichtauskopplungsseite 23 geleitet und dort aus der Leuchtenanordnung mit der entsprechenden Abstrahlcharakteristik (bspw. gerichtet, diffus) abgestrahlt.

Um die Totalreflektion zu unterstützen, können in entsprechenden Oberflächenbereichen des Lichtleitteils 10 und/oder des Lichtankopplungsteils 20 Reflexionsabschnitte beispielsweise mittels aufgebrachter Reflexionsschichten bzw. -folien ausgebildet sein.

Figur 2b zeigt die gesamte Anordnung in einer Explosionsansicht. Hier sind wiederrum besonders gut die matrixartig angeordneten Lichtleitkörper 21 zu erkennen. Ferner ist der schichtartige Zusammenbau der gesamten Anordnung zu erkennen.

Figur 2c zeigt die Anordnung in einer Draufsicht von einer der Lichteinkopplungsseiten 13 her.

Figur 2d zeigt die Anordnung von einer der Lichteinkopplungsseiten 12 her.

Schließlich zeigt Figur 2e die Sicht von oben, d. h. auf den Reflexionsabschnitt 3.

Die lentikularen Strukturen 14 weisen vorzugsweise eine glatte Oberfläche auf, sodass je nach Lichteinfallrichtung das einfallende Licht in Richtung Lichtauskopplungsseite 11 ausgekoppelt wird (bei Lichteinfall in die Seite 12) oder in Richtung Reflexionsabschnitt 3 totalreflektiert wird.

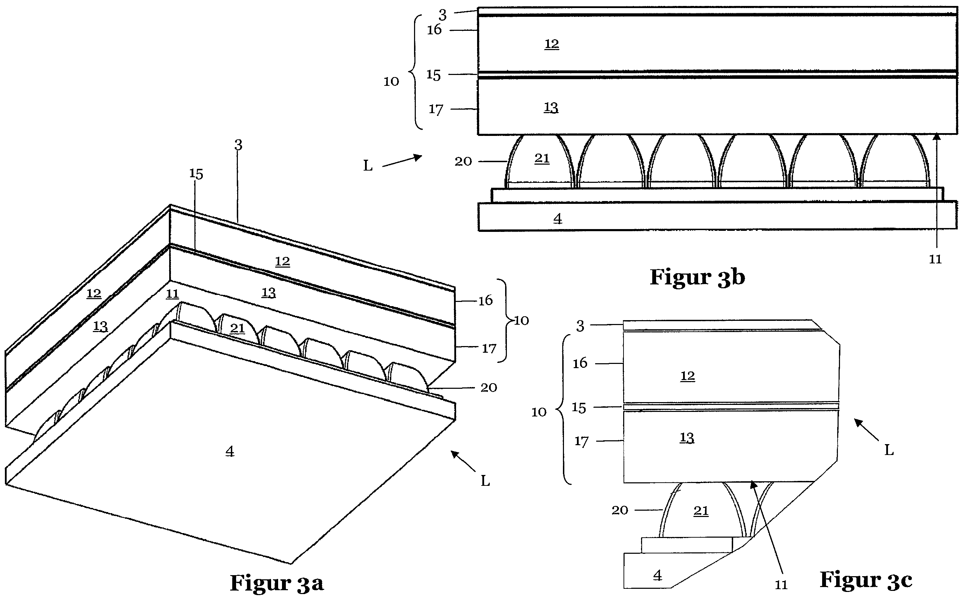

Figur 3 zeigt eine Anordnung gemäß einer dritten Ausführungsform der Erfindung.

Wie zu erkennen, ist das Lichtleitteil 10 hier mehrteilig, bevorzugt zweiteilig ausgebildet. Es umfasst ein erstes Lichtleitelement 16, das umlaufend vier Lichteinkopplungsseiten 12 aufweist, und hier exemplarisch darunter ein zweites Lichtleitelement 17 mit Lichteinkopplungsseiten 13, hier ebenfalls umlaufend ausgebildet.

Zwischen beiden Lichtleitelementen 16, 17 befindet sich vorzugsweise ein Diffusor exemplarisch in Form einer Diffusorfolie 15. Diese ist beispielsweise mittels Klebens an den beiden Lichtleitelementen 16,17 angebracht.

Der Diffusor kontaktiert vorzugsweise nur das erste Lichtleitelement 16, kann ggf. aber auch das zweite Lichtleitelement 17 kontaktieren. Die optische Dichte des Diffusors ist vorzugsweise zum Lichtleitelement 17 geringer und zum Lichtleitelement 16 identisch oder größer. Dies ermöglicht die Totalreflektion von in das zweite Lichtleitelement 17 eingeleiteten Lichts, wohingegen aus dem Lichtleitelement 16 ankommendes Licht in Richtung Lichtleitelement 17 gebrochen oder unverändert weitergeleitet wird. Damit gibt es nicht das Problem, dass Licht vom Lichtleitelement 17 in das Lichtleitelement 16 gelangen und von dort ungewollt als diffuses Licht wieder zurück in das Lichtleitelement 17 gelangen kann.

Alternativ zur Auswahl der optischen Dichte sind wenigstens das Lichtleitelement 17 und der Diffusor 15 zueinander im Abstand angeordnet. Der Abstand kann mittels Abstandhaltern realisiert sein, sodass sich zwischen Diffusor und Lichtleitelement 17 Luft befindet. In dem Fall gewährleistet die Luft als zum Lichtleitelement 17 optisch dünneres Medium die vorbeschriebene Totalreflektion im Lichtleitelement 17.

Anstelle von Luft kann der Zwischenraum zwischen Lichtleitelement 17 und Diffusor auch mit einem lichtleitenden Material ausgefüllt sein. Dieses Material ist vorzugsweise wiederum optisch dünner als das Lichtleitelement 17, sodass auch hier die Totalreflektion gewährleistet ist. Diese Lösung hat den Vorteil, die Lichtleitelemente 16, 17 weiterhin zueinander ortsfest anordnen zu können; das Lichtleitteil 10 kann weiterhin als Modul, also als bauliche Einheit, ausgebildet werden.

Im Fall das Abstands bzw. des zwischenliegenden Materials kann der Diffusor entfallen, und der Reflexionsabschnitt 3 ist an seiner dem Lichtleitelement 17 zugewandten Seite als diffuser Reflektor ausgebildet, was den Aufbau vereinfacht. Auch eine Kombination mit Diffusor 15 und diffusem Reflektor ist denkbar.

An einer dem unteren Lichtleitelement 17 abgewandten Seite des oberen Lichtleitelements 16 befindet sich also der Reflexionsabschnitt 3 vorzugsweise wiederum aus mikrozellularen PET. Die dem oberen Lichtleitelement 16 abgewandte Seite des unteren Lichtleitelements 17 bildet somit die Lichtauskopplungsseite 11 des Lichtleitteils 10. An dieses schließt sich wiederrum exemplarisch ein optisches Element bzw. Lichtankopplungsteil 20 vorzugsweise mit Lichtleitkörpern 21 an, dessen in Figur 3a nicht sichtbare, dem Lichtleitteil 10 abgewandte Seite an einer Abdeckung 4 angebracht sein kann, die vorzugsweise wiederum aus einem optisch transparenten Material gebildet ist. Im Gegensatz zu der vorherigen Ausführungsform hat diese Ausführungsform den Vorteil, dass das Licht nur in eine einzige Seite, die beispielsweise hier nach vorne weist, des jeweiligen Lichtleitelements 16, 17 eingekoppelt werden muss. Dies ermöglicht beispielsweise den Einsatz von zwei LED-Reihen, wobei eine LED-Reihe das Licht in die eine der Lichteinkopplungsseiten 12 abstrahlt, und die andere Reihe ihr Licht in eine der Lichteinkopplungsseiten 13. Die LED-Reihen als Leuchtmittel können somit auf einer einzigen Platine platziert und in Bezug auf das Lichtleitteil 10 entsprechend ausgerichtet angeordnet werden.

Auch wenn hier nicht dargestellt, wird auch hier das Licht, dass in das erste Lichtleitelement 16 eingeleitet wird, beispielsweise an dem diffusen Reflektor und/oder dem Diffusor 15 diffus reflektiert bzw. gebrochen und über das zweite Lichtleitelement 17 in Richtung Abdeckung 4 abgestrahlt. Das Licht, dass in das zweite Lichtleitelement 17 eingeleitet wird, wird wiederum über die Ankoppelbereiche von optischem Element 20 mit dem zweiten Lichtleitelement 17 als gerichtetes Licht über das optische Element 20 ausgekoppelt und über die Abdeckung 4 abgestrahlt. Die nach unten weisende Seite der Abdeckung 4, welche Seite also dem Lichtleitteil 10 abgewandt ist, bildet somit die Lichtaustrittsfläche 23 der gesamten Anordnung.

Figur 3b zeigt die Anordnung von den hier in Richtung Betrachter weisenden Lichteinkopplungsseiten 12, 13 her in einer Draufsicht.

Figur 3c zeigt die Anordnung in einer Detailansicht.

Die Abdeckung 4 ist hinsichtlich des auszukoppelnden Lichts transparent. D. h. sie kann beispielsweise rot eingefärbt sein, wenn rotes Licht ausgekoppelt werden soll, die Abdeckung 4 ist also hinsichtlich des roten Lichts transparent. Diese Definition gilt für die gesamte Anmeldung.

Die einzelnen Bestandteile der Anordnung, also das Lichtleitteil 10, der Reflexionsabschnitt 3, die Diffusorfolie 15 und die Abdeckung 4 mit Lichtankopplungsteil 20, können mittels Klebens, Laminierens oder jeder sonstigen Befestigung miteinander verbunden sein.

Anstelle der Lichteinkopplungsseite 12 kann auch die dem Lichtankopplungsteil 20 abgewandte Seite der Diffusorfolie 15 direkt beleuchtet werden. In dem Fall bildet die dem Lichtankopplungsteil 20 abgewandte flächige Seite der Folie 15 die Lichteinkopplungsseite 12.

In beiden Fällen ist die Lichtauskopplungsgeometrie, wie das Lichtleitteil 10 und das Lichtankopplungsteil 20, für einen Betrachter nicht sichtbar.

Ist das Lichtankopplungsteil 20 wiederum aus Silikon, beispielsweise in Form einer Silikonlinsenmatte gebildet, bieten sich auch hier die vorgenannten Vorteile. Ferner kann auch die Diffusorfolie 15 flexibel an den Lichtleitelementen 16, 17 des Lichtleitteils 10 ortsfest bzw. flexibel in gewissem Maße bewegbar angeordnet sein. Dazu kann vorgesehen sein, die Diffusorfolie 15 beispielsweise ebenfalls mittels Silikons oder dergleichen Materialien an den Teilen des Lichtleitteils 10 flexibel anzubringen.

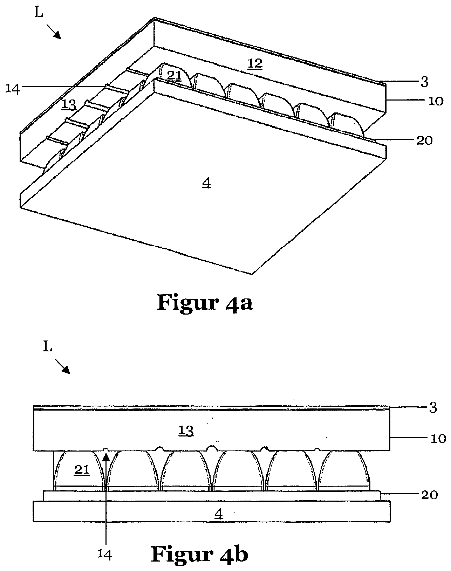

Figur 4 zeigt eine Anordnung gemäß einer vierten Ausführungsform der Erfindung.

Sie unterscheidet sich von der ersten Ausführungsform im Wesentlichen dadurch, dass hier an der dem Lichtankopplungsteil 20 abgewandten Seite des Lichtleitteils 10 ebenfalls eine Reflektionsschicht bzw. ein Reflektionsteil 3 angeordnet bzw. ausgebildet ist. Ferner verfügt diese Anordnung wiederum über eine Abdeckung 4.

Hier kann ebenfalls wieder Licht von allen vier Seiten 12, 12, 13, 13, eingekoppelt werden, wobei die notwendige Lichtauskopplungsstruktur im Wesentlichen wieder aus den lentikularen Strukturen 14 und den Kontaktbereichen zwischen Lichtleitkörper 21 und Lichtauskopplungsseite 11 des Lichtleitteils 10 besteht. Wiederum über die Lichteinkopplungsseiten 12 eingekoppeltes Licht wird mittels der Strukturen 14 optisch beeinflusst und als diffuses Licht abgestrahlt. Über die Lichteinkopplungsseiten 13 eingekoppeltes Licht wird über die Ankoppelbereiche von optischem Element 20 und Lichtleitteil 10 als gerichtetes Licht ausgekoppelt und abgestrahlt.

Es ist bei allen Ausführungsbeispielen gemäß der vorliegenden Erfindung möglich, das Licht nur über eines der beiden Lichteinkopplungsabschnitte 12, 13 oder über beide zugleich in das Lichtleitteil 10 einzuleiten, sodass ein geschaltetes bzw. gemischtes Licht erzeugt werden kann, das also sowohl diffus als auch gerichtete Anteile aufweist, die an derselben Lichtauskopplungsseite 11 bzw. der hier nach unten weisenden Seite der Abdeckung 4 vorzugsweise aufgrund des Lichtankopplungsteils 20 homogen ausgestrahlt wird. Die Leuchtenanordnung ist dabei derart ausgebildet, dass die definierten Bereiche der Lichtaustrittsfläche 23, über die das über die ersten Lichteinkopplungsbereiche 13 eingekoppelte nicht optische beeinflusste (bspw. gerichtete) Licht, und die definierten Bereiche, über die das über die zweiten Lichteinkopplungsbereiche 12 eingekoppelte optische beeinflusste (bspw. diffuse) Licht abgestrahlt wird, sich wenigstens teilweise überdecken.

Figur 4b zeigt die Anordnung von einer Lichteinkopplungsseite 13 her in einer Draufsicht.

Das Licht kann aufgrund der unterschiedlichen Lichteinkopplungsseiten 12, 13 wie bei den vorhergehenden Ausführungsformen zwischen diffusem, gerichtetem oder einem gemischten (mit diffusem und gerichtetem Lichtanteil) geschaltet werden, obwohl es nur eine Lichtaustrittsfläche 23 gibt.

Figuren 4a und 4b ist deutlich zu entnehmen, dass die mehreren lentikularen Strukturen von dem zweiten Lichteinkopplungsabschnitt 12 aus gesehen wenigstens bis zur Mitte des Lichtleitteils 10 hin im Querschnitt derart in ihrer Größe zunehmen (und im gezeigten Fall zur gegenüberliegenden Seite - vorzugsweise aufweisend einen weiteren des der zweiten Lichteinkopplungsabschnittes 12 - wieder abnimmt), dass über den Querschnitt jeder lentikularen Struktur 14 eine homogene Lichtauskopplung von diffusem Licht in Richtung Lichtauskopplungsabschnitt 11 stattfinden kann, wenn Licht in den zweiten Lichteinkopplungsabschnitt 12 einfällt. Ist der zweite Lichteinkopplungsabschnitt 12 lediglich auf einer (Stirn-) Seite des Lichtleitteils 10 vorgesehen, so nimmt der Querschnitt der lentikularen Strukturen 14 vorzugsweise von dem einen zweiten Lichteinkopplungsabschnitt 12 stetig zu. Ist der zweite Lichteinkopplungsabschnitt 12 aber auf gegenüberliegenden (Stirn-)Seiten des Lichtleitteils 10 vorgesehen, so kann der Querschnitt der jeweiligen lentikularen Strukturen 14 jeweils zur Mitte - ausgehend von den jeweiligen zweiten Lichteinkopplungsabschnitten 12 - hin zunehmen, so dass der/die mittigen lentikularen Strukturen 14 den größten Querschnitt aufweisen.

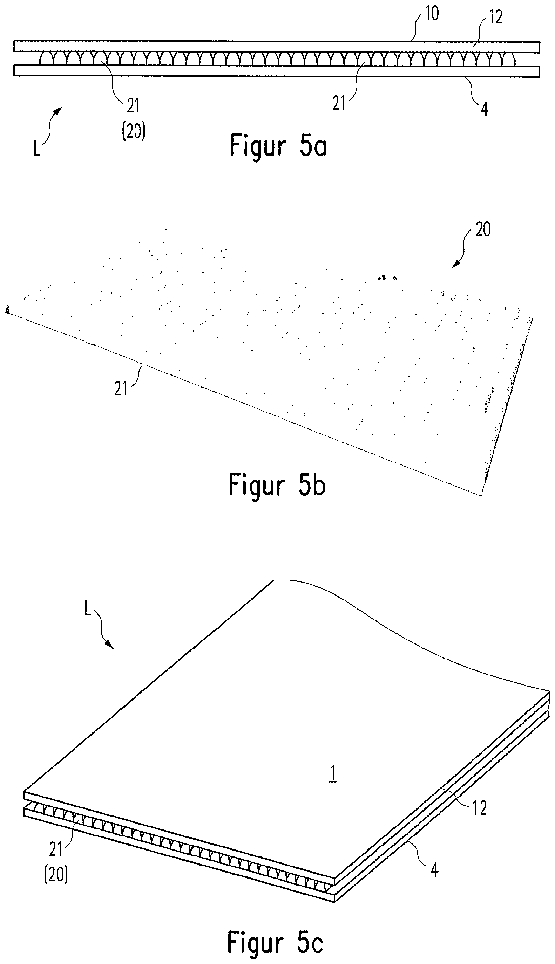

Figur 5 zeigt eine Anordnung gemäß einer fünften Ausführungsform der Erfindung.

Diese Anordnung besteht ebenfalls aus einem Lichtleitteil 10, einem darunter angeordneten Lichtankopplungsteil 20 und einer wiederum darunter angeordneten Abdeckung 4. Es entsteht somit eine dreischichtige Struktur für eine Leuchtenanordnung.

Das Lichtleitteil 10 kann wie bei den vorherigen Ausführungsformen ausgebildet sein. Es kann aber auch lediglich als plattenartiges Teil ohne irgendwelche gesonderten Strukturen ausgebildet sein. Es ist an seiner dem Lichtankopplungsteil 20 zugewandten Seite an diesem befestigt. Das gleiche gilt für die Abdeckung 4 in Bezug auf die dem Lichtleitteil 10 abgewandte Seite des Lichtankopplungsteils 20. Das Lichtankopplungsteil 20 weist exemplarisch wiederum matrixartige Lichtleitkörper 21 hier in Form von Pyramidenstümpfen und/oder Linsen auf. Diese bilden optische Leitvorrichtungen, um Licht, das in das Lichtleitteil 10 eingeleitet wird, weitestgehend homogen über die Abdeckung 4 aus der gesamten Anordnung abzustrahlen, sodass wiederum eine flächige und homogene Leuchtfläche entsteht. Insbesondere an den Außenrandbereichen dieser Anordnung ist dies von Bedeutung. Das Lichtankopplungsteil 20 ist vorzugsweise ein Silikonformteil, was den Vorteil hat, das es an die Elemente 4,10 auflaminiert werden kann, sodass es mit diesen formschlüssig in Eingriff steht. Das optische Element 20 kann folglich als flexibles Verbindungselement ausgebildet sein. Dies hat den Vorteil, dass solche eine Verbindung in der Regel kaum in der Lage ist, aufgrund thermischer und/oder mechanischer Belastung zu reißen, was insbesondere bei großflächigen Leuchteinrichtungen von Bedeutung ist.

Damit werden herkömmliche Klebeverbindungen vermieden, die beispielsweise aufgrund von Alterungsprozessen aushärten und damit ihre Verbindung zu einem der jeweils miteinander zu verbindenden Teile lösen können.

Das Lichtankopplungsteil 20 ist vorzugsweise als Silikonlinsenmatte ausgeführt und an das Lichtleitteil 10 angeklebt. Die Abdeckung 4 kann auch geklebt sein. Aufgrund des flexiblen Materials des Lichtankopplungsteils 20 sind die Klebestellen in wesentlich geringerem Ausmaß oder überhaupt nicht dem Problemen aufgrund thermischen Ausdehnungsverhaltens und/oder mechanischen Einflüssen unterworfen.

Figur 5b zeigt das Lichtankopplungsteil 20 ohne die daran angebrachten Teile 4,10.

Figur 5c zeigt die gesamte Anordnung in einer perspektivischen Ansicht im Teilausschnitt. Insbesondere diese Abbildung verdeutlicht, dass diese erfindungsgemäße Lösung insbesondere für großflächige Leuchtelemente geeignet ist.

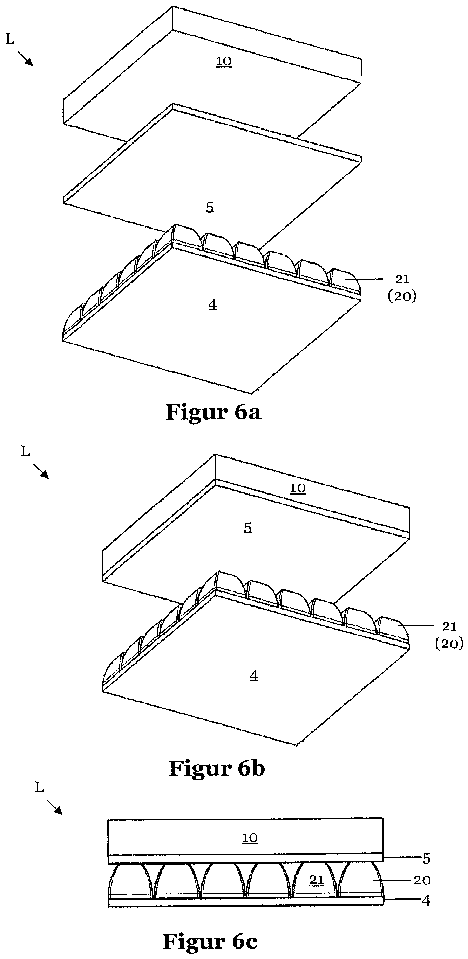

Figur 6 zeigt eine Anordnung gemäß einer sechsten Ausführungsform der Erfindung.

Diese Anordnung besteht im Wesentlichen aus einem Lichtleitteil 10, einer Silikonplatte 5, einem Lichtankopplungsteil 20 und einer optionalen Abdeckung 4, die in dieser Reihenfolge schichtenartig aneinander angebracht sind. D. h. die Silikonplatte 5 bildet eine Art Zwischenschicht bzw. flexibles Verbindungselement 5. Zusätzlich oder alternativ kann das flexible Verbindungselement 5 auch zwischen optischem Element 20 einerseits und Abdeckung 4 andererseits vorgesehen sein. Das Lichtankopplungsteil 20 ist mittels einer Linsenplatte gebildet, die aus einem Material wie Polymethylmethacrylat (PMMA) oder aber auch aus Silikon bestehen kann. Die Linsen sind hier mittels Lichtleitkörpern 21 schematisch dargestellt. Die Abdeckung 4 ist vorzugsweise ebenfalls als PMMA-Platte ausgebildet. Da diese Materialien relativ starr sind, bietet die Silikonplatte 5 neben der optischen Lichtdurchleitung den Vorteil, dass die Elemente 10, 20 aneinander flexibel angebracht werden können. D. h. die Elemente 10, 20 können sich aufgrund der elastisch ausgebildeten Silikonplatte in vorbestimmten Maß, das durch das Silikonmaterial vorgegeben ist, relativ zu einander hier entlang ihrer großen, zueinander im Wesentlichen parallelen Flächen "bewegen" bzw. sind flexibel miteinander verbunden. Dies verhindert, dass etwaige Klebeflächen über die Zeit reißen können und es so zu Instabilitäten in der Anordnung kommen kann. Dies wirkt sich positiv auf die Lebensdauer der gesamten Anordnung aus.

Es ergeben sich mithin die gleichen Vorteile wie bei der fünften Ausführungsform der Erfindung.

Zudem hat diese Ausführungsform den Vorteil, dass das Linsenankopplungsteil 20 nicht aus einem flexiblen Material gebildet sein muss. Dies ermöglicht, insbesondere hinsichtlich der optischen Umlenkung des Lichts, das Lichtankopplungsteil 20 auf ebenjene optische Umlenkfunktion hin optimieren zu können.

Die Abdeckung 4 kann zudem zugleich eine Abdeckung einer diese Anordnung aufweisenden Leuchtvorrichtung bilden

Überdies kann es nicht mehr dazu kommen, dass ein sich gegenseitiges Verschieben der Teile 20, 4 gegeneinander zu einer optischen Veränderung des abgestrahlten Lichts kommt, da sich die Lichtleitkörper 21 verformen könnten.

Überdies ermöglicht diese Anordnung das Austauschen des Lichtankopplungsteils 20 oder der Abdeckung 4, wenn es beispielsweise beschädigt ist. Oder es kann gegen ein anderes Lichtankopplungsteil 20 mit anderen optischen Eigenschaften ausgetauscht werden.

Das Lichtankopplungsteil 20 kann aus PMMA oder optischem Silikon gebildet sein.

Figur 6b zeigt die Anordnung, bei der die Silikonplatte bzw. das Verbindungselement 5 auf dem Lichtleitteil 10 befestigt ist. Es entsteht so eine Lichtleiter-Verbundplatte bzw. ein Verbundmaterial-Lichtleiter mit der Materialkombination PMMA-Silikon für eine elastische bzw. flexible Anbindung des Lichtankopplungsteils 20 hier an das Lichtleitteil 10. Dies ermöglicht die Herstellung der Verbundplatte vorab, bevor das Lichtankopplungsteil 20 aufgesetzt bzw. darauf angebracht wird. D. h. hier kann ein zweischichtiges modulartiges Element 10, 5 vorab hergestellt werden, bevor die Anordnung endgültig montiert wird.

PMMA ist ein Material, dessen Herstellungsverfahren wohlbekannt ist. Die hier nicht sichtbare Lichtauskopplungsseite 23 bildet vorzugsweise eine Oberfläche einer die Leuchtenanordnung aufweisenden Leuchtvorrichtung. Die entstehende Silikonschicht kann dünner ausfallen als ein Lichtankopplungsteil 20 aus Silikon. Zudem ist Silikon teurer als PMMA, was Kostenvorteile mit sich bringt. Silikon erfüllt vorteilhafterweise nur die Funktion der Flexibilität. Ferner können hierdurch Standardteile verwendet werden; das Verbinden kann einfach mittels Laminieren von Silikonplatte und PMMA-Platte (Lichtankopplungsteil 20) erfolgen.

Im Rahmen der gesamten Erfindung ist anzumerken, dass die Abstände der Lichtleitkörper 21 zueinander variieren kann. Bei separat ausgebildeten Lichtleitkörpern 21 können diese in der gewünschten Anordnung auf eine Silikonmatte aufgebracht werden; mithin also definiert oder undefiniert sowie an nur definierten Bereichen der Leuchtenanordnung, um insbesondere gerichtetes Licht nur in diesen definierten Bereichen zu erzeugen.

Als Anwendung kommen hochwertige Leuchtvorrichtungen wie Büroleuchten in Frage.

Figur 6c zeigt die Anordnung in einer Seitenansicht.

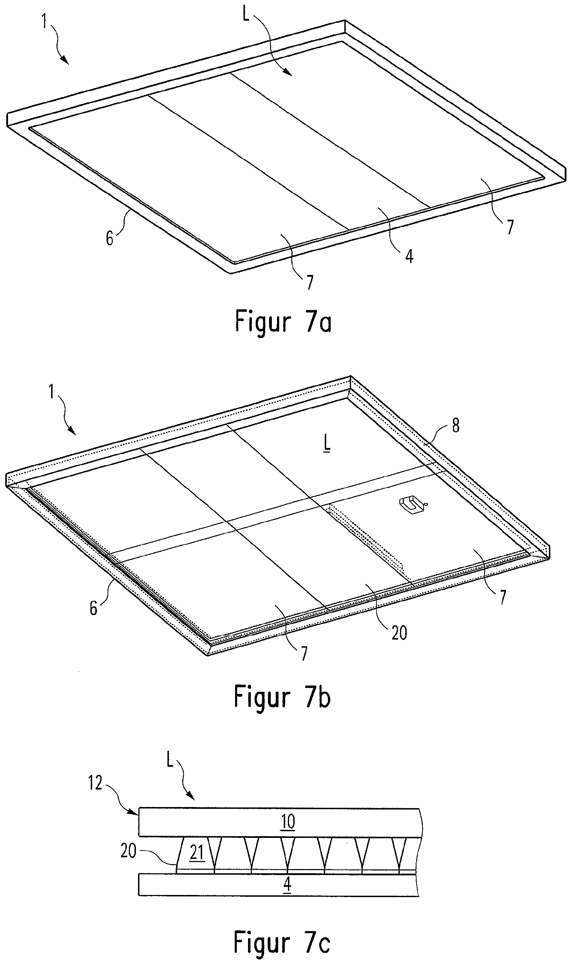

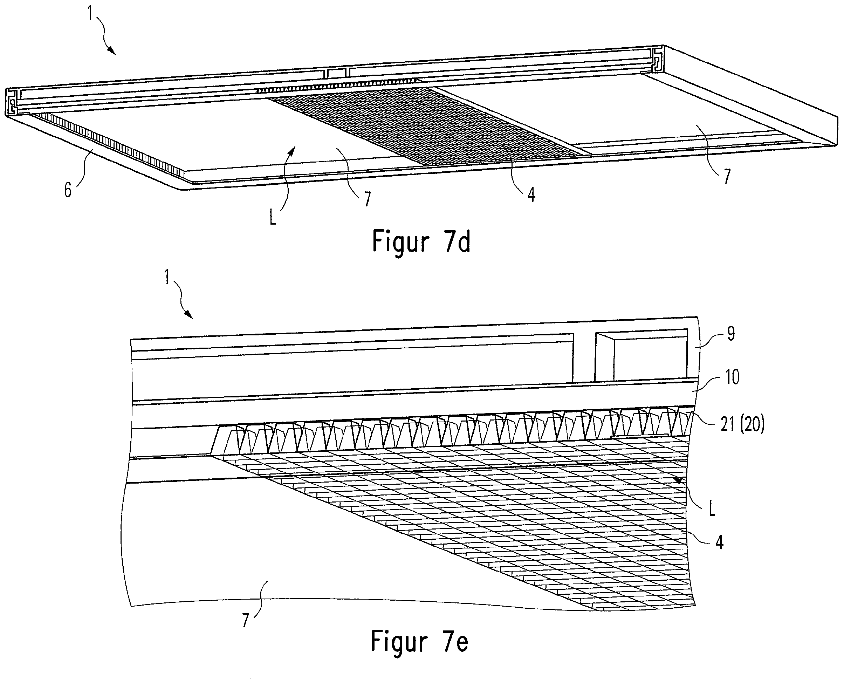

Figur 7 zeigt eine Leuchte 1 gemäß einer Ausführungsform der Erfindung in verschiedenen Ansichten. Figur 7a zeigt eine perspektivische Gesamtansicht solch einer Leuchte 1. Wie zu erkennen, weist die Leuchte 1 beispielhaft einen umlaufenden Rahmen 6 auf, der in Richtung Leuchtseite von drei Abdeckungen 7, 4, 7 abgeschlossen ist. Die Abdeckungen 7, 4, 7 können mehrteilig oder vorzugsweise einteilig (integral) ausgebildet sein. Wenigstens die Abdeckung 4 ist lichtdurchlässig.

Figur 7b zeigt die Leuchte 1 von Figur 7a in einer Strichdarstellung. Wie zu erkennen befindet sich (nur) unterhalb der Abdeckung 4 das Lichtankopplungsteil 20. Aufgrund der Vielzahl von hier nicht näher erkennbaren Lichtleitkörpern 21 erscheint das Lichtankopplungsteil 20 in Figur 7b als im Wesentlichen schwarzes Element. Umfangsseitig des Lichtleitteils 10 können Leuchtmittel 8, wie insbesondere LEDs, vorzugsweise in dem Rahmen 6, aber in jedem Fall der entsprechenden Stirnseite; also Lichteinkopplungsabschnitt 12, 13, zugeordnet, angeordnet sein. Ist die gesamte Abdeckung 7, 4, 7 lichtdurchlässig, bildet diese die Lichtaustrittsfläche, wobei bei entsprechender erfindungsgemäßer Ausgestaltung vorliegend der definierte Bereich zur Abstrahlung optisch beeinflussten (bspw. diffus abstrahlenden) Lichts durch die gesamte Lichtaustrittsfläche 23 gebildet wird, während der definierte Bereich zur Abstrahlung nicht optisch beeinflussten (bspw. gerichtet abstrahlenden) Lichts lediglich durch den dem optischen Element 20 zugeordneten Bereich der Lichtaustrittsfläche 23 - also der Abdeckung 4 - gebildet wird. Sind die Abdeckungen 7 jedoch nicht lichtdurchlässig oder erstreckt sich das optische Element 20 über die gesamte Fläche der Leuchtenanordnung, so wäre der definierte Bereich der Lichtaustrittsfläche 23 sowohl zur Abstrahlung optisch beeinflussten als auch optisch nicht beeinflussten Lichts identisch.

Figur 7c zeigt das Lichtankopplungsteil 20 im Querschnitt und im Ausschnitt. Es ist beispielhaft wie in Figur 5 gezeigt, ausgebildet. D. h. es gibt ein Lichtleitteil 10, das Lichtankopplungsteil 20 und die Abdeckung 4. Zudem ist das Lichtankopplungsteil 20 vorzugsweise wieder aus einem flexiblen Material wie Silikon gebildet, und die Elemente 10, 4 aus einem starren Material wie PMMA. Die Elemente 10, 4 sind vorzugsweise mittels Klebens oder in sonstiger Weise am Lichtankopplungsteil 20 angebracht. Als Kleber kommt vorzugsweise transparenter Kleber infrage, der vorteilhafterweise über einen geeigneten Brechungsindex für die Leuchtenanordnung verfügt; an den Klebestellen ist die Totalreflektion aufgehoben. Es ist jedoch anzumerken, dass zusätzlich oder alternativ zu der flexiblen Verbindungsstruktur Lichtleitstrukturen zur optischen Beeinflussung des Lichts, wie zuvor beschrieben, vorhanden sein können.

Figur 7d zeigt die Leuchte 1 in einem Teilausschnitt. Eine Gehäuserückwand 9 der Leuchte 1 weist eine stegartige Struktur auf, um einerseits die Leuchtenanordnung sicher zu tragen und andererseits Raum zur Abfuhr von Wärme bereitstellt. Wie zu erkennen, werden die Abdeckungen 7, 7 sowie 4 durch ein und dasselbe Element gebildet. D. h. im gezeigten Beispiel gibt es eine einzige PMMA-Platte, die die Abdeckungen 7, 4, 7 bildet. Sie ist gegebenefalls in den Bereichen der Abdeckungen 7, 7 lichtundurchlässig ausgebildet. Dies erfolgt im einfachsten Fall dadurch, dass die Platte an ihrer dem Lichtleiterteil 10 zugewandten Seite in den Bereichen der Abdeckungen 7, 7 mit einer lichtundurchlässigen Folie versehen ist.

Ferner ist zu erkennen, dass das Lichtankopplungsteil 20 lediglich im Bereich der Abdeckung 4 ausgebildet ist.

Mit den Anordnungen, aufweisend eine flexible Verbindung zwischen Lichtleitteil 10 und Abdeckung 4, ist die Realisierung einer Verbundlichtleiter-Linsenoptik möglich.

Die Erfindung ist nicht auf die vorbeschriebenen Ausführungsformen beschränkt. Beispielsweise kann bei allen Leuchten vorgesehen sein, dass das Licht sowohl für gerichtetes als auch für diffuses Licht eingekoppelt werden kann.

Insofern kann auch bei den ersten fünf Ausführungsformen die Anordnung mit einer Silikonlinsenplatte ausgebildet sein.

Anstelle des gerichteten oder diffusen Lichts können auch anderen Abstrahlcharakteristiken zur Veränderung bzw. Beeinflussung oder aber zur Ausstrahlung eines vorbestimmten Lichts herangezogen werden. Beispielsweise kann eine Lichteinkopplungsseite mit einer Farbfolie beklebt sein, sodass das gerichtete Licht nur in einer bestimmten Farbe ausgestrahlt wird.

Die Lichtleitkörper 21 können jedwede Form beispielsweise auch in Form von Sammel- und/oder Zerstreuungslinsen aufweisen, je nachdem, welche optische Veränderung des eingestrahlten Lichts bzw. des abgestrahlten Lichts erreicht werden soll.

Im Ergebnis bietet die Erfindung eine einfache Möglichkeit, verschiedenartiges Licht getrennt oder miteinander gemischt an ein und derselben Lichtaustrittsstelle einer Leuchtvorrichtung auszustrahlen.

Ferner ermöglicht die Erfindung die Ausbildung großflächiger Leuchten, ohne dass das Problem entsteht, das diese an ihren Verbindungsstellen reißen kann.

Die vorbeschriebenen Anordnungen können zudem ausgebildet sein, Leuchtmittel wie LEDs daran zu befestigen. Dies kann mittels Platinengehäusen aus optisch transparentem Material zumindest an der Lichtaustrittsseite erfolgen, die an vorteilhafterweise dem Lichtleitteil 10 oder möglicherweise auch an anderen Teilen aus formbeständigen Material wie der Abdeckung 4 befestigt sein können.

Die Befestigung mittels Klebens bzw. Laminierens kann durch jede andere Befestigungsart wie Schweißen, Verrasten, Verschrauben und dergleichen ersetzt oder damit kombiniert sein.

Insbesondere ermöglicht das vorstehend beschriebene Linsenblockraster bei Einsatz des Lichtleitteils mit zwei Lichteinkopplungsseiten 12, 13 das Umschalten zwischen diffuser Strahlung und/oder gerichteter Lichtstrahlung, die die Leuchtenanordnung an der Lichtauskopplungsseite 23 verlässt. Es ist auch der Einsatz von Optik-LEDs denkbar.

Die vorbeschriebenen lentikularen Strukturen 14 sind vorzugsweise zwischen aneinander angrenzenden Lichtleitkörpern 21 des Lichtankopplungsteils 20 angeordnet und haben - wie die gesamte Optik - eine sehr glatte Oberfläche, sodass auf ihr unter Umständen Totalreflexion stattfinden kann. Wird in ein vorzugsweise quaderförmiges Lichtleitteil 10 bzw. die rechteckförmige Lichteinkopplungsseite 13 Licht eingekoppelt, das im wesentlichen parallel zu den lentikularen Strukturen 14 verläuft, wird dieses an den Strukturen 14 totalreflektiert und verbleibt im Lichtleitteil 10, bis es auf eine Ankoppelstelle mit einem Lichtleitteil 21 trifft, das mit der Lichtaustrittsfläche 11 des Lichtleitteils 10 in Berührungskontakt steht. Dann wird das Licht in Richtung Lichtankopplungsteil 20 aus dem Lichtleitteil 10 ausgekoppelt und verlässt dieses somit; es entsteht gerichtetes Licht. Wird Licht in den Lichtleiter eingekoppelt, das im Wesentlichen orthogonal zu den lentikularen Strukturen 14 verläuft, wird dieses aus dem Lichtleitteil 10 diffus herausgebrochen oder diffus auf einen rückseitig des Lichleitteils 10 vorgesehen (diffusen) Reflektor geleitet, von dem es zur Lichtaustrittsfläche 11 reflektiert wird, und dient somit zur Erzeugung von diffusem Licht. Bei der Erzeugung von diffusem Licht wird das Licht an den lentikularen Strukturen 14 und/oder dem Reflexionsabschnitt 3 diffus aufgestreut. Das aufgestreute Licht geht zwar wiederum durch das Lichtankopplungsteil 20 (sowie Zwischenräume desselben) hindurch, aber von undefinierter Richtung her kommend, so dass das aus der Leuchtenanordnung austretende Licht überwiegend diffus ist. Es tritt zudem auch an den Stellen über die Lichtaustrittsfläche 11 aus dem Lichtleitteil 10 heraus, an denen das Lichtauskopplungsteil 20 mit der Lichtaustrittsfläche 11 nicht in Berührungskontakt steht. Es gibt mithin auch möglicherweise kein entblendetes Licht. Allerdings erscheint an der Lichtauskopplungsseite 23 ebenfalls ein homogenes Lichtfeld.

Orthogonal zu den lentikularen Strukturen 14 einfallendes Licht wird vorzugsweise von zwei gegenüberliegenden Seiten des Lichtleitteils 10 in dieses eingeleitet. Parallel zu den lentikularen Strukturen 14 verlaufendes Licht wird ebenfalls vorzugsweise von zwei gegenüberliegenden Seiten des Lichtleitteils 10 in dieses eingeleitet. Das Lichtleitteil 10 bzw. eine damit ausgestattete Leuchtvorrichtung, Optik oder Lichtleiterplatte kann rückseitig mit einem diffus streuenden Reflektor abgedeckt sein, so dass über die lentikularen Strukturen 14 umgelenkte Licht über den Reflektor (beispielsweise aus weißem MC PET) diffus aufgestreut werden kann.

Als Leuchtvorrichtung kommt jede Art in Frage, insbesondere solche zum Einbau wie Decken, zum Anbau wie an Konstruktionen und Pendelleuchten. Die Leuchtvorrichtung kann als reine Linsenleuchte ausgebildet sein; die Linsenfunktion kann das Lichtankopplungsteil 20 übernehmen. Diffusfelder, die beispielhaft vom vorgenannten Diffusor bzw. einem diffusen Reflektor erzeugt werden können, können auch entfallen. In dem Fall kann die Lichteinkopplungsseite 12 entsprechend uneben ausgebildet sein, um diffuses Licht in der Lichtleitteil 10 einzuleiten.

Alle Leuchtenanordnungen können mit Indirektlicht versehen sein. In dem Fall tritt das indirekte Licht vorzugsweise an einer der Lichtauskopplungsseite 23 abgewandten Seite des Lichtleitteils 10 bzw. des daran angeordneten Reflexionsabschnitts 3 aus der Leuchtenanordnung aus. Es entsteht mithin eine Art rückseitige Lichtauskopplung. In diesem Fall weist der Rahmen 6 bzw. die Gehäuserückwand 9 entsprechende Öffnungen (nicht gezeigt) auf, um eine entsprechende Indirektlichtbeleuchtung zu ermöglichen.

Das Lichtankopplungsteil 20 kann in Bezug auf das Lichtleitteil 10 beidseitig vorgesehen sein, sodass das Licht zu zwei Seiten des Lichtleitteils 10 gemäß der Erfindung austreten kann, also gemäß unterschiedlicher Abstrahlcharakteristik.

Das Lichtleitteil 10 kann mit zusätzlichen Lichtauskoppelstrukturen versehen sein, die beispielsweise seitlich austretendes, farbiges Licht realisieren.

Die Lichteinkopplung kann anstatt von einer Lichteinkopplungsseite 12, 13 her von verschiedenen Lichteinkopplungsseiten her erfolgen, und zwar gleichzeitig oder in jedweder Kombination beispielsweise zeitlich gesteuert. Auch kann eine Leuchtmittelanordnung als Ersatz für eine andere vorgesehen sein. Solange die andere Leuchtmittelanordnung funktioniert, bleibt die eine Leuchtmittelanordnung ausgeschaltet. Fällt die andere Leuchtmittelanordnung aus, oder hat sie eine sonstige Fehlfunktion, wird die eine Leuchtmittelanordnung zugeschaltet. Dadurch können die defekten Leuchtmittel ausgetauscht werden, ohne dass die Leuchtvorrichtung zwischenzeitlich ihre Funktion verliert.

Als Materialkombinationen für das Lichtleiteil 10, das Lichtankopplungsteil 20 und die Abdeckung 4 kommen vorzugsweise PMMA-Silikon-PMMA und PMMA-Silikon-Glas zum Einsatz. Es sind aber alle anderen Materialien wie Polycarbonat (PC) sowie alle denkbaren Kombinationen mit derartigen Materialien insbesondere bei Verwendung eines Silikonklebers möglich.

Das Lichtankopplungsteil 20 kann an seiner Lichtauskopplungseite 23 eben, flach oder gewölbt ausgebildet sein. Das gleiche gilt für die Abdeckung 4 an ihrer dem Lichtleitteil 10 abgewandten Seite. Die Lichtleitkörper 21 können zueinander identisch oder unterschiedlich ausgebildet sein, je nachdem, welche Abstrahlcharakteristik das von der Leuchtenanordnung ausgesendete Licht haben soll.

Die Verwendung von Silikon beispielsweise für das Lichtankopplungsteil 20 kann mit Klebeverbindungen kombiniert sein, sodass zwischen Lichtleitteil 10 und Abdeckung 4 weiterhin eine flexible Verbindung besteht.

Die Vorteile der Erfindung lassen sich wie folgt zusammenfassen. Es entsteht ein homogenes Leuchtbild an der Lichtauskopplungsseite das Licht wird vor dem Austritt über die so gebildete (gesamte) Leuchtenfläche 23 verteilt. Zudem entsteht eine homogene Leuchtdichteverteilung, sodass es nicht zu den bekannten Randabdunkelungen kommt. Die Leuchtenanordnung kann zur Erzeugung insbesondere diffusen oder gerichteten Lichts oder einer Mischung daraus verwendet werden, und das unter Nutzung ein und derselben Lichtauskopplungsseite bzw. Lichtaustrittsfläche 23; oder wenigstens sich überdeckender definierter Bereiche in der Lichtaustrittsfläche 23. Es gibt keinen optischen Bezug des ausgestrahlten Lichts zu einem bestimmten Leuchtmittel wie einer LED einer LED-Leiste; die Leuchtmittel sind nicht identifizierbar. Auch ist keine Platine sichtbar. Die Verwendbarkeit von Leuchtmittelleisten erlaubt den Einsatz schmaler Platinen, sodass zum einen wenig Platinenmaterial verbraucht wird und zum anderen die Außenabmessungen minimal gehalten werden können. Durch die seitliche Lichteinkopplung ist eine gute Wärmeabfuhr der erzeugten Betriebswärme möglich. Treiberschaltungen können an der der Leuchtenanordnung abgewandten Seite der Platine angeordnet werden. Es ergibt sich zudem eine gute Wärmeverteilung über die Leuchtmittelanordnung hinweg, sodass wenig Kühlkörpermaterial notwendig ist. Zudem sind keine zusätzlichen Lichtleitelemente 16, 17 nötig, um die Funktionsintegration diffuses und gerichtetes Licht in ein und derselben Leuchtvorrichtung zu integrieren. Zudem erhöht sich der Wirkungsgrad solch einer Leuchtvorrichtung, da keine Licht-Rückreflexionen durch mehrfachen Materialdurchgang und dergleichen vorkommen; Streulicht wird zur Erzeugung diffusen Lichts "verwertet".

Der Reflexionsabschnitt 3 kann über Ausnehmungen oder Durchgangsöffnungen für Indirektlich verfügen. Das (diffuse) Licht verlässt die Leuchtenanordnung also teilweise nicht über die Lichtauskopplungsseite 23.

Der Reflexionsabschnitt 3 ermöglicht zudem den Verzicht auf den Einsatz großbauender Reflektoren beispielsweise in Form einer hohlen Halbkugel.

Insbesondere hochglanzpolierte oder hochglänzende Oberflächen der Elemente 10, 20 insbesondere zum Zwecke der Totalreflektion in Verbindung mit einer der Lichtauskopplungsseite 23 zugewandten, weißen Fläche beispielsweise des Reflexionsabschnitts 3 ermöglichen, dass nur dieses Weiß erkennbar ist, sonst aber nichts.

Ein weiterer Vorteil der Erfindung besteht darin, dass das Lichtleitteil 10, das Lichtankopplungsteil 20 und/oder die Abdeckung 4 keine Spritzteile sein müssen, die nachbearbeitet werden müssten.

Die vorbeschriebenen optischen Rasterelemente beispielhaft in Form einer Linsenmatte werden vorzugsweise aus Silikon gefertigt. Dieses Material bildet im Verbund mit der transparentem Kunststoffabdeckung 4 und dem Kunststoff-Lichtleiter 10 eine Lichtleitoptik bzw. Leuchtenanordnung. Das Silikon liegt haftend bzw. klebend zwischen den beiden Kunststoffplatten 4, 10. Im Fall von PMMA als Material ist die optische Grenzschicht aufgrund des Silikons zwischen PMMA und Kunststoff aufgehoben, es findet an den Berührungsstellen keine Totalreflexion statt, sodass die gewünschte Lichtleitung funktioniert. Der so gebildete Silikonblockraster kann als Formteil in Serie hergestellt werden und mittels Klebens mittels eines geeigneten Klebers an die Abdeckung 4 und das Lichtleitteil 10 gefügt werden. Solch ein Kleber kann optisch durchlässiger, transparenter Silikonkleber sein. Die Silikonkomponente kann direkt auf der transparenten Abdeckung 4 gefertigt werden, sodass sich beim Gießen ein Verbund zwischen Silikon und PMMA bzw. PC einstellt. Es muss nun nur die Anbindung an das Lichtleitteil 10 geklebt werden.

Alternativ oder zusätzlich kann das Lichtleitteil 10 vor Abschluss des Aushärteprozesses des Silikons auf dieses aufgebracht werden, sodass sich auch auf dieser Seite ein flexibler Verbund entsteht. In diesem Fall klebt das Material auf dem Lichtleitteil 10 und/oder der Abdeckung 4.

Eine weitere Möglichkeit besteht darin, die mittels des Lichtankopplungsteils 20 gebildete Silikonoptik auf einer oder beiden Kunststoffoberflächen von Lichtleitteil 10 und Abdeckung 4 anliegen zu lassen und mittels Adhäsion eine Bindung zu erreichen. Es können adhäsionsverstärkende Mittel aufgebracht werden. Konstruktiv wird die Optik derart ausgelegt, dass die Adhäsionskräfte größer sind als die dem Verbund entgegenwirkenden Kräfte (z.B. aufgrund einer Durchbiegung der Abdeckung 4). Dadurch bleibt der Verbund im Betrieb der Leuchtenanordnung bzw. der damit ausgestatteten Leuchtvorrichtung aufrecht erhalten. Im Verbund zwischen den zwei plattenartigen Teilen 4, 10 ist das schmutzempfindliche Silikonteil geschützt aufgenommen.

Die Vorteile sind, dass die Verbindungsstellen nicht aufreißen, das Lichtankopplungsteil 20 kann gefertigt werden und funktioniert. Optisch gibt es keinen Bezug zu Leuchtmitteln, was zu einem homogenen Lichtfeld führt. Insbesondere sind die Bestandteile der Leuchtvorrichtung wie LEDs, Platine(n), Diffusor und dergleichen sichtbar. Es werden keine Lichtauskoppelstrukturen benötigt, bzw. auch sie sind nicht sichtbar. Es entsteht mithin eine brillante, transparente Optik. Zudem bietet die Erfindung einen hohen (Leucht-)Wirkungsgrad, da beim Übergang zwischen den einzelnen Elementen 10, 20, 4 kaum oder gar keine Rückreflexion stattfindet. Es gibt praktisch keinen Verlust aufgrund der vorbeschriebenen Diffusoranordnungen. Es kann immer entblendetes Licht zur Verfügung gestellt werden, was den Einsatz insbesondere im Bürobereich ermöglicht. Schließlich sind quasi "durchsichtige" Leuchten realisierbar, da auf einen rückseitigen Reflektor verzichtet werden kann.

Anstelle des vorgenannten Klebens kann das Silikon angegossen sein. Auch sind Verbindungen mittels Adhäsion denkbar Die Lichtleitkörper können jedwede gewünschte Form (z. B. pyramidenstumpfförmig, linsenförmig) aufweisen und in jeder gewünschten Anordnung (z. B. einreihig, mehrreihig, kreisringförmig) vorgesehen sein.

Die vorgenannten Leuchtenanordnungen sind als Lichtleiter-Linsen-Optik einsetzbar, wobei das Lichtleitteil 10 den Lichtleiter bildet und das Lichtankopplungsteil 20 als Lichtleitkörper Linsen aufweist und/oder diese zusätzlich einschließt bzw. umfasst.

Die Leuchtenanordnung bzw. eine damit ausgestattete Leuchtvorrichtung ist beispielsweise zur Unterputz- und Aufputzmontage, als Einsetz- und Aufsatzmodul und als Pendelleuchte realisierbar. Die Pendelleuchte kann transparent ausgebildet sein, sodass ein beidseitiger Lichtaustritt möglich ist. In dem Fall kann ein Leuchtenreflektor entfallen.

Das Lichtankopplungsteil kann aus Silikon, PMMA, PC oder einem anderen transparenten Kunststoff gebildet sein.

Die Erfindung ist sowohl auf Außen- als auch auf Innenraumleuchten anwendbar oder als solche ausbildbar. Insbesondere die flexible Gestaltung einzelner Elemente wie der Verbindungen fördert dies.

Es sei angemerkt, dass die einzelnen Merkmale, die in den einzelnen Ausführungsbeispielen beschrieben sind, in beliebiger Weise miteinander kombiniert werden können, solange sie vom Gegenstand der vorliegenden Anmeldung abgedeckt sind. Ferner kann die Ausführungsform mit lichtbeeinflussenden Strukturen einerseits sowie die Ausführungsform mit flexibler Verbindung wenigstens zwischen optischem Element und Abdeckelement als unabhängige Merkmale oder aber auch in Kombination vorliegen.

### Bezugszeichenliste

- 1: Leuchtvorrichtung
- 3: Reflexionsabschnitt
- 4: Abdeckung
- 5: Silikonplatte
- 6: Rahmen
- 7: Abdeckung
- 8: Leuchtmittel
- 9: (Gehäuserück-)Wand
- 10: Lichtleitteil
- 11: Lichtauskopplungsseite
- 12: Zweite(r) Lichteinkopplungsseite / Lichteinkopplungsabschnitt
- 13: Erste(r) Lichteinkopplungsseite / Lichteinkopplungsabschnitt
- 14: Lentikulare Struktur
- 15: Diffusor(-folie)
- 16: Erstes Lichtleitelement
- 17: Zweites Lichtleitelement
- 20: Optisches Element / Lichtankopplungsteil
- 21: Lichtleitkörper
- 22: Lichteinkopplungsseite
- 23: Lichtaustrittsfläche
- L: Leuchtenanordnung

## Patentansprüche

1. Leuchtenanordnung (L), aufweisend:
• ein flächiges Lichtleitteil (10) mit
- einem ersten Lichteinkopplungsabschnitt (13),
- einem zu dem ersten Lichteinkopplungsabschnitt (13) verschiedenen, zweiten Lichteinkopplungsabschnitt (12) sowie
- einer Lichtauskopplungsseite (11), die auf einer flächigen Seite des Lichtleitteils (10) vorgesehen ist,
• ein optisches Element (20), welches teilweise in flächigem Kontakt mit der Lichtauskopplungsseite (11) steht,
• eine Lichtaustrittsfläche (23), die auf einer der Lichtauskopplungsseite (11) abgewandten Seite des optischen Elements (20) vorgesehen ist, und
• Lichtleitstrukturen (3,14,15), die so angeordnet und gestaltet sind, dass sie
- in den ersten Lichteinkopplungsabschnitt (13) von außen einfallendes Licht optisch nicht beeinflussen, sodass das über den ersten Lichteinkopplungsabschnitt (13) einfallende Licht gemäß einer ersten Abstrahlcharakteristik über den Kontaktbereich zwischen dem Lichtleitteil (10) und dem optischen Element (20) über die Lichtauskopplungsseite (11) aus dem Lichtleitteil (10) und weiter über einen ersten definierten Bereich der Lichtaustrittsfläche (23) nach außen aus der Leuchtenanordnung (L) austritt, und
- in den zweiten Lichteinkopplungsabschnitt (12) von außen einfallendes Licht optisch beeinflussen, sodass das über den zweiten Lichteinkopplungsabschnitt (12) einfallende Licht gemäß einer zweiten Abstrahlcharakteristik über die Lichtauskopplungsseite (11) aus dem Lichtleitteil (10) und weiter über einen zweiten definierten Bereich der Lichtaustrittsfläche (23), der sich wenigstens teilweise mit dem ersten definierten Bereiche überdeckt, nach außen aus der Leuchtenanordnung (L) austritt,
wobei die Lichtleitstrukturen (3, 14) umfassen
• einen auf einer der Lichtauskopplungsseite (11) abgewandten Seite des Lichtleitteils (10) angeordneten Reflexionsabschnitt (3) und
• optische Umlenkstrukturen (14), die so in dem flächigen Lichtleitteil (10) angeordnet und gestaltet sind, dass vom zweiten Lichteinkopplungsabschnitt (12, 13) einfallendes Licht so zum Reflexionsabschnitt (3) umgelenkt wird, dass der Reflexionsabschnitt (3) das ankommende, umgelenkte Licht in Richtung Lichtauskopplungsseite (11) reflektiert, sodass das reflektierte Licht über die Lichtauskopplungsseite (11) nach außen aus dem Lichtleitteil (10) austritt.

2. Leuchtenanordnung (L) gemäß Anspruch 1, wobei jeder der Lichteinkopplungsabschnitte (12, 13) jeweils auf wenigstens einer Stirnseite des Lichtleitteils (10) vorgesehen sind.

3. Leuchtenanordnung (L) gemäß Anspruch 1 oder 2, wobei der Reflexionsabschnitt (3) Ausnehmungen für Indirektlicht aufweist.

4. Leuchtenanordnung (L) gemäß einem der vorhergehenden Ansprüche, wobei
• die Lichteinkopplungsabschnitte (12, 13) jeweils in einer Ebene liegen, wobei die Ebene(n) der ersten Lichteinkopplungsabschnitte (13) und die Ebene(n) der zweiten Lichteinkopplungsabschnitte (12) einen spitzen, rechten oder stumpfen Winkel zueinander einschließen, oder
• die Lichteinkopplungsabschnitte (12, 13) vorzugsweise auf Stirnseiten des Lichtleitteils (10) vorgesehen sind, die aneinander anstoßen, und einen spitzen, rechten oder stumpfen Winkel einschließen.

5. Leuchtenanordnung (L) gemäß einem der vorhergehenden Ansprüche, wobei
• der erste und/oder der zweite Lichteinkopplungsabschnitt (12, 13) jeweils mittels zweier, einander gegenüberliegender Stirnseiten des Lichtleitteils (10) gebildet ist bzw. sind und
• die Lichtleitstrukturen (3, 14, 15) zwischen den jeweils einander gegenüberliegenden Stirnseiten des bzw. der Lichteinkopplungsabschnitte (12, 13) angeordnet sind.

6. Leuchtenanordnung (L) gemäß einem der vorhergehenden Ansprüche, wobei
• die erste Abstrahlcharakteristik ein Austreten gerichteten Lichts umfasst und
• die zweite Abstrahlcharakteristik ein Austreten diffusen Lichts umfasst.

7. Leuchtenanordnung (L) gemäß einem der vorhergehenden Ansprüche, wobei die optischen Umlenkstrukturen (14) zumindest eine lentikulare Struktur (14) umfassen, die sich
• im Wesentlichen senkrecht zu dem ersten Lichteinkopplungsabschnitt (13) und
• im Wesentlichen parallel zu dem zweiten Lichteinkopplungsabschnitt (12) erstreckt,
wobei die optischen Umlenkstrukturen (14) vorzugsweise mehrere lentikulare Strukturen (14) aufweisen, die von dem zweiten Lichteinkopplungsabschnitt (12) aus gesehen wenigstens bis zur Mitte des Lichtleitteils (10) hin im Querschnitt derart in ihrer Größe zunehmen, dass über den Querschnitt jeder lentikularen Struktur (14) eine homogene Lichtauskopplung von diffusem Licht in Richtung Lichtauskopplungsabschnitt (11) stattfinden kann, wenn Licht in den zweiten Lichteinkopplungsabschnitt (12) einfällt,
wobei vorzugsweise zumindest eine lentikulare Struktur (14) mittels einer an der Lichtauskopplungsseite (11) des Lichleitteils (10) ausgebildeten rillenartigen Ausnehmung gebildet ist, die vorzugsweise durchgehend ausgebildet ist, wobei vorzugsweise eine lentikulare Struktur (14) seitlich mit einem der zwei Lichteinkopplungsabschnitte (12, 13) bündig abschließt, und
wobei der Querschnitt einer jeweiligen lentikularen Struktur (14) vorzugsweise rund, halbkreisförmig, dreieckig, spitz, stumpf, vieleckig oder oval ist.

8. Leuchtenanordnung (L) gemäß einem der vorhergehenden Ansprüche, wobei das Lichtleitteil (10) wenigstens zwei flächige Lichtleitelemente (16, 17) aufweist, wobei
• ein erstes Lichtleitelement (17) der Lichtleitelemente (16, 17) die Lichtauskopplungsseite (11) umfasst, und
• ein zweites Lichtleitelement (16) der Lichtleitelemente (16, 17) auf der der Lichtauskopplungsseite (11) abgewandten Seite des ersten Lichtleitelements (17) angeordnet ist,
wobei vorzugsweise
• auf wenigstens einer Stirnseite des ersten Lichtleitelements (17) der erste Lichteinkopplungsabschnitt (13) vorgesehen ist, und
• auf wenigstens einer Stirnseite des zweiten Lichtleitelements (16) der zweite Lichteinkopplungsabschnitt (13) vorgesehen ist.

9. Leuchtenanordnung (L) gemäß einem der vorhergehenden Ansprüche, wobei,
• der erste Lichteinkopplungsabschnitt (13) auf einer Stirnseite des Lichtleitteils (10) vorgesehen ist und
• der zweite Lichteinkopplungsabschnitt (12) entweder auf einer der Lichtauskopplungsseite (11) abgewandten Seite des Lichtleitteils (10) oder auf einer Stirnseite des Lichtleitteils (10) vorgesehen ist, die von der den ersten Lichteinkopplungsabschnitt aufweisenden Stirnseite und einer dem ersten Lichteinkopplungsabschnitt gegenüberliegenden Stirnseite verschieden ist.

10. Leuchtenanordnung (L) gemäß einem der vorhergehenden Ansprüche, wobei die Lichtleitstrukturen (3, 14, 15) einen Diffusor (15) vorzugsweise in Form einer Diffusorfolie (15) aufweisen, der auf einer der Lichtauskopplungsseite (11) abgewandten Seite des Lichtleitteils (10) und/oder zwischen zwei Lichtleitelementen (16,17) des Lichtleitteils (10) angeordnet ist.

11. Leuchtenanordnung (L) gemäß einem der Ansprüche 8 bis 10, wobei
• die Lichtleitelemente (16,17) zueinander beabstandet sind,
• sich zwischen den Lichtleitelementen (16,17) ein in Bezug auf das erste Lichtleitelement (17) optisch dünneres Material befindet und/oder
• zwischen dem Diffusor (15) ein in Richtung Lichtauskopplungsseite (11) lichtreflektierendes Reflektorelement vorgesehen ist oder der Diffusor (15) an seiner dem ersten Lichtleitelement (17) zugewandten Seite reflektierend ausgebildet ist,
wobei der Diffusor vorzugsweise teilweise offen ist.

12. Leuchtenanordnung (L) gemäß einem der vorhergehenden Ansprüche, wobei das optische Element (20) ein optisches Linsenelement vorzugsweise in Form eines Linsenblockrasterelements (20) aufweist.

13. Leuchtenanordnung (L) gemäß einem der vorhergehenden Ansprüche, ferner aufweisend ein lichtdurchlässiges Abdeckelement (4), welches auf der dem Lichleitteil (10) abgewandten Ende des optischen Elements (20) vorgesehen ist, vorzugsweise mit dem optischen Element (20) integral ausgebildet ist, und ferner vorzugsweise die Lichtaustrittsfläche (23) aufweist.

14. Leuchtenanordnung (L) gemäß Anspruch 13, wobei zwischen dem Lichtleitteil (10) einerseits und dem Abdeckelement (4) anderseits ein flexibles Verbindungselement (5, 20) wenigstens auf Seiten des Lichtleitteils (10) vorgesehen ist.

15. Leuchtenanordnung (L) gemäß Anspruch 14, wobei die Verbindung erfolgt, indem
• das optische Element (20) aus einem lichtdurchlässigen und flexiblen Material gebildet ist, mittels dessen das optische Element (20) als das flexible Verbindungselement am Abdeckelement (4) und am Lichtleitteil (10) befestigt ist, und/oder
• das Verbindungselement (5)
- aus einem lichtdurchlässigen und flexiblen Material gebildet ist und
- am optischen Element (20) einerseits sowie am Abdeckelement (4) bzw. am Lichtleitteil (10) anderseist befestigt ist,
wobei das Material vorzugsweise ein optisches Silikon ist,
wobei die Befestigung vorzugsweise mittels Laminierens erfolgt, und
wobei das Material vorzugsweise optische Lichtbeeinflussungselemente einschließt bzw. aufweist.

16. Leuchtvorrichtung (1),
• aufweisend
- eine Leuchtenanordnung (L) gemäß einem der vorhergehenden Ansprüche sowie
- Leuchtmittel (8) zum Einkoppeln von Licht über zumindest einen der Lichteinkopplungsabschnitte (12, 13) des Lichtleitteils (10) der Leuchtenanordnung (L).

17. Leuchtvorrichtung (1) gemäß Anspruch 16, wobei jeder der Lichteinkopplungsabschnitte (12, 13) wenigstens ein Leuchtmittel (8) zugeordnet ist, und/oder
ausgebildet als Leuchte mit direkter und/oder indirekter Beleuchtung, und/oder
ferner aufweisend
• Diffusfelder (15) und/oder
• zusätzliche Lichtauskoppelstrukturen (20), und/oder
aufweisend zwei einander gegenüberliegende Lichtaustrittsflächen (23),
wobei das Lichtleitteil (10) ausgebildet ist, das einfallende Licht so umzuleiten, dass das gemäß der jeweiligen Abstrahlcharakteristik optisch beeinflusste Licht aus beiden Lichtaustrittsflächen (23) nach außen aus der Leuchtvorrichtung austritt, und/oder
ferner aufweisend mehrere Leuchtmittel (8), die in einer oder mehreren Reihen angeordnet sind.

## Claims

1. Lamp arrangement (L) comprising:
• a flat light-guiding part (10) having
- a first light coupling portion (13),
- a second light coupling portion (12) different from the first light coupling portion (13) and
- a light outcoupling side (11) provided on a flat side of the light-guiding part (10),
• an optical element (20), which is partially in planar contact with the light outcoupling side (11),
• a light exit surface (23) provided on a side of the optical element (20) facing away from the light outcoupling side (11) and
• light-guiding structures (3, 14, 15), which are disposed and designed such that they
- do not optically influence light incident from the outside into the first light coupling portion (13), so that the light incident via the first light coupling portion (13) exits the light-guiding part (10) via the contact region between the light-guiding part (10) and the optical element (20) via the light outcoupling side (11) and further exits the lamp arrangement (L) outward via a first defined region of the light exit surface (23) according to a first emission characteristic and
- do optically influence light incident from the outside into the second light coupling portion (12), so that the light incident via the second light coupling portion (12) exits the light-guiding part (10) via the light outcoupling side (11) and further exits the lamp arrangement (L) outward via a second defined region of the light exit surface (23), which at least partially overlaps the first defined region, according to a second emission characteristic,
wherein the light-guiding structures (3, 14) comprise
• a reflecting portion (3) disposed on a side of the light-guiding part (10) facing away from the light outcoupling side (11) and
• optical deflecting structures (14) which are designed and disposed in the flat light-guiding part (10) such that light incident from the second light coupling portion (12, 13) is deflected toward the reflecting portion (3) in such a way that the reflecting portion (3) reflects the incoming, deflected light in the direction of the light outcoupling side (11) so that the reflected light exits the light-guiding part (10) outward via the light outcoupling side (11).

2. Lamp arrangement (L) according to Claim 1, wherein each one of the light coupling portions (12, 13) is respectively provided on at least one end face of the light-guiding part (10).

3. Lamp arrangement (L) according to Claim 1 or 2,
wherein the reflecting portion (3) comprises recesses for indirect light.

4. Lamp arrangement (L) according to any one of the preceding claims, wherein
• the light coupling portions (12, 13) respectively lie in one plane, wherein the plane(s) of the first light coupling portions (13) and the plane(s) of the second light coupling portions (12) include an acute, right or obtuse angle to one another or
• the light coupling portions (12, 13) are preferably provided on end faces of the light-guiding part (10) which abut one another and include an acute, right or obtuse angle.

5. Lamp arrangement (L) according to any one of the preceding claims, wherein
• the first and/or the second light coupling portions (12, 13) is or are respectively formed by two oppositely disposed end faces of the light-guiding part (10) and
• the light-guiding structures (3, 14, 15) are disposed between the respectively oppositely disposed end faces of the light coupling portions (12, 13).

6. Lamp arrangement (L) according to any one of the preceding claims, wherein
• the first emission characteristic includes an exit of directed light and
• the second emission characteristic includes an exit of diffuse light.

7. Lamp arrangement (L) according to any one of the preceding claims, wherein the optical deflecting structures (14) comprise at least one lenticular structure (14) which extends
• substantially perpendicular to the first light coupling portion (13) and
• substantially parallel to the second light coupling portion (12),
wherein the optical deflecting structures (14) preferably comprise a plurality of lenticular structures (14) which, viewed from the second light coupling portion (12), increase in size in cross-section at least to the center of the light-guiding part (10) such that a homogeneous light outcoupling of diffuse light in the direction of the light outcoupling portion (11) can take place over the cross-section of each lenticular structure (14) when light is incident into the second light coupling portion (12),
wherein at least one lenticular structure (14) is preferably formed by a groove-like recess which is configured on the light outcoupling side (11) of the light-guiding part (10) and is preferably configured to be continuous, wherein one lenticular structure (14) preferably terminates flush against the side of one of the two light coupling portions (12, 13) and
wherein the cross-section of a respective lenticular structure (14) is preferably round, semicircular, triangular, pointed, obtuse, polygonal or oval.

8. Lamp arrangement (L) according to any one of the preceding claims, wherein the light-guiding part (10) comprises at least two flat light-guiding elements (16, 17), wherein
• a first light-guiding element (17) of the light-guiding elements (16, 17) comprises the light outcoupling side (11) and
• a second light-guiding element (16) of the light-guiding elements (16, 17) is disposed on the side of the first light-guiding element (17) facing away from the light outcoupling side (11),
wherein preferably
• the first light coupling portion (13) is provided on at least one end face of the first light-guiding element (17) and
• the second light coupling portion (13) is provided on at least one end face of the second light-guiding element (16).

9. Lamp arrangement (L) according to any one of the preceding claims, wherein
• the first light coupling portion (13) is provided on an end face of the light-guiding part (10) and
• the second light coupling portion (12) is provided either on a side of the light-guiding part (10) facing away from the light outcoupling side (11) or on an end face of the light-guiding part (10), which is different from the end face comprising the first light-coupling portion and an end face opposite to the first light-coupling portion.

10. Lamp arrangement (L) according to any one of the preceding claims, wherein the light-guiding structures (3, 14, 15) comprise a diffuser (15) which is preferably in the form of a diffuser film (15) and is disposed on a side of the light-guiding part (10) facing away from the light outcoupling side (11) and/or between two light-guiding elements (16, 17) of the light-guiding part (10).

11. Lamp arrangement (L) according to any one of Claims 8 to 10, wherein
• the light-guiding elements (16, 17) are spaced apart from one another,
• a material which is optically thinner relative to the first light-guiding element (17) is disposed between the light-guiding elements (16, 17) and/or
• a reflector element which reflects light in the direction of the light outcoupling side (11) is provided between the diffuser (15) or the diffuser (15) is configured to be reflective on its side facing the first light-guiding element (17),
wherein the diffuser is preferably partially open.

12. Lamp arrangement (L) according to any one of the preceding claims, wherein the optical element (20) comprises an optical lens element, preferably in the form of a lens block array element (20).

13. Lamp arrangement (L) according to any one of the preceding claims, further comprising a light-permeable cover element (4), which is provided on the end of the optical element (20) facing away from the light-guiding part (10), is preferably integrally formed with the optical element (20) and further preferably comprises the light exit surface (23).

14. Lamp arrangement (L) according to Claim 13, wherein a flexible connecting element (5, 20) is provided between the light-guiding part (10) on the one hand and the cover element (4) on the other hand, at least on the side of the light-guiding part (10).

15. Lamp arrangement (L) according to Claim 14, wherein the connection is made in that
• the optical element (20) is made of a light-permeable and flexible material by means of which the optical element (20) is fastened as the flexible connecting element to the cover element (4) and the light-guiding part (10), and/or
• the connecting element (5)
- is made of a light-permeable and flexible material and
- is fastened to the optical element (20) on the one hand and to the cover element (4) or the light-guiding part (10) on the other hand,
wherein the material is preferably an optical silicone,
wherein fastening is preferably carried out by means of lamination and
wherein the material preferably includes or comprises optical light influencing elements.

16. Lighting device (1),
• comprising
- a lamp arrangement (L) according to any one of the preceding claims and
- lighting means (8) for coupling light via at least one of the light coupling portions (12, 13) of the light-guiding part (10) of the lamp arrangement (L).

17. Lighting device (1) according to Claim 16, wherein each of the light coupling portions (12, 13) is associated with at least one lighting means (8) and/or
is configured as a lamp with direct and/or indirect illumination and/or
further comprising
• diffuse fields (15) and/or
• additional light outcoupling structures (20) and/or comprising two oppositely disposed light exit surfaces (23), wherein the light-guiding part (10) is configured to redirect the incident light such that the light which is optically influenced according to the respective emission characteristic exits the lighting device outward from both light exit surfaces (23) and/or further comprising a plurality of lighting means (8) which are disposed in one or more rows.

## Revendications

1. Système d'éclairage (L) présentant :
* une pièce de guidage de lumière (10) d'une certaine étendue comportant
- une première section d'injection de lumière (13),
- une deuxième section d'injection de lumière (12), différente de la première section d'injection de lumière (13), et
- un côté d'éjection de lumière (11) prévu sur une face de grande étendue de la pièce de guidage de lumière (10),
. un élément optique (20) en contact étendu partiel avec le côté d'éjection de lumière (11),
. une surface de sortie de lumière (23) prévue sur une face de l'élément optique (20) détournée du côté d'éjection de lumière (11), et
• des structures de guidage de lumière (3, 14, 15) agencées et conçues pour
- n'avoir aucune influence optique sur la lumière provenant de l'extérieur et en incidence sur la première section d'injection de lumière (13), de telle façon que la lumière incidente traversant la première section d'injection de lumière (13) soit émise vers l'extérieur du système d'éclairage (L) conformément à une première caractéristique de rayonnement après avoir traversé la zone de contact entre la pièce de guidage de lumière (10) et l'élément optique (20), après avoir traversé le côté d'éjection de lumière (11) hors de la pièce de guidage de lumière (10) et après avoir en outre traversé une première zone définie de la surface de sortie de lumière (23), et
- avoir une influence optique sur la lumière provenant de l'extérieur et en incidence sur la deuxième section d'injection de lumière (12), de telle façon que la lumière incidente traversant la deuxième section d'injection de lumière (12) soit émise vers l'extérieur du système d'éclairage (L) conformément à une deuxième caractéristique de rayonnement après avoir traversé le côté d'éjection de lumière (11) hors de la pièce de guidage de lumière (10) et après avoir traversé en outre une deuxième zone définie de la surface de sortie de lumière (23) en chevauchement au moins partiel avec la première zone définie,
lesdites structures de guidage de lumière (3, 14) comprenant
• une section de réflexion (3) agencée sur une face de la pièce de guidage de lumière (10) qui est détournée du côté d'éjection de lumière (11), et
• des structures de déflexion optique (14) qui sont agencées dans la pièce de guidage de lumière (10) d'une certaine étendue et conçues pour défléchir la lumière incidente en provenance de la deuxième section d'injection de lumière (12, 13) vers la section de réflexion (3) de telle façon que la section de réflexion (3) réfléchisse la lumière défléchie arrivante en direction du côté d'éjection de lumière (11) de telle façon que la lumière réfléchie soit émise vers l'extérieur de pièce de guidage de lumière (10) après avoir traversé le côté d'éjection de lumière (11).

2. Système d'éclairage (L) selon la revendication 1, dans lequel chacune des sections d'injection de lumière (12, 13) est respectivement prévue sur au moins une face avant de la pièce de guidage de lumière (10).

3. Système d'éclairage (L) selon la revendication 1 ou 2,
dans lequel la section de réflexion (3) présente des évidements pour la lumière indirecte.

4. Système d'éclairage (L) selon l'une des revendications précédentes, dans lequel
• les sections d'injection de lumière (12, 13) se situent chacune dans un plan, le ou les plans des premières sections d'injection de lumière (13) et le ou les plans des deuxièmes sections d'injection de lumière (12) formant entre eux un angle aigu, droit ou obtus, ou bien
• les sections d'injection de lumière (12, 13) sont de préférence prévues sur des faces avant de la pièce de guidage de lumière (10) contiguës et formant un angle aigu, droit ou obtus.

5. Système d'éclairage (L) selon l'une des revendications précédentes, dans lequel
• la première et/ou la deuxième section d'injection de lumière (12, 13) sont formées par deux faces latérales opposées de la pièce de guidage de lumière (10), et
• les structures de guidage de lumière (3, 14, 15) sont agencées entre les faces latérales opposées de la ou des sections d'injection de lumière (12, 13).

6. Système d'éclairage (L) selon l'une des revendications précédentes, dans lequel
• la première caractéristique de rayonnement comprend une sortie de lumière dirigée, et
• la deuxième caractéristique de rayonnement comprend une sortie de lumière diffuse.

7. Système d'éclairage (L) selon l'une des revendications précédentes, dans lequel les structures de déflexion optique (14) comprennent au moins une structure lenticulaire (14) qui s'étend
• de manière sensiblement perpendiculaire à la première section d'injection de lumière (13), et
• de manière sensiblement parallèle à la deuxième section d'injection de lumière (12),
lesdites structures de déflexion optique (14) présentant de préférence plusieurs structures lenticulaires (14) qui, vues depuis la deuxième section d'injection de lumière (12), présentent, au moins jusqu'au milieu de la pièce de guidage de lumière (10), une section transversale qui va en grossissant de telle manière que la section transversale de chaque structure lenticulaire (14) permet une sortie de lumière diffuse homogène vers la section d'éjection de lumière (11) lorsque de la lumière est en incidence dans la deuxième section d'injection de lumière (12),
au moins une structure lenticulaire (14) étant de préférence formée par un évidement de type rainure constitué sur le côté d'éjection de lumière (11) de la pièce de guidage de lumière (10), lequel évidement est de préférence continu, une structure lenticulaire (14) se terminant de préférence latéralement en affleurement avec l'une des deux sections d'injection de lumière (12, 13), et
ladite section transversale de toute structure lenticulaire (14) donnée étant de préférence ronde, semi-circulaire, triangulaire, pointue, obtuse, polygonale ou ovale.

8. Système d'éclairage (L) selon l'une des revendications précédentes, dans lequel la pièce de guidage de lumière (10) présente au moins deux éléments de guidage de lumière (16, 17) d'une certain étendue, étant entendu que
• un premier élément de guidage de lumière (17) parmi les éléments de guidage de lumière (16, 17) comprend le côté d'éjection de lumière (11), et
• un deuxième élément de guidage de lumière (16) parmi les éléments de guidage de lumière (16, 17) est agencé sur la face du premier élément de guidage de lumière (17) qui est détournée du côté d'éjection de lumière (11),
et dans lequel de préférence
• la première section d'injection de lumière (13) est prévue sur au moins une face latérale du premier élément de guidage de lumière (17), et
• la deuxième section d'injection de lumière (13) est prévue sur au moins une face latérale du deuxième élément de guidage de lumière (16).

9. Système d'éclairage (L) selon l'une des revendications précédentes, dans lequel
• la première section d'injection de lumière (13) est prévue sur une face latérale de la pièce de guidage de lumière (10), et
• la deuxième section d'injection de lumière (12) est prévue soit sur une face de la pièce de guidage de lumière (10) qui est détournée du côté d'éjection de lumière (11), soit sur une face latérale de la pièce de guidage de lumière (10) qui est différente de la face latérale présentant la première section d'injection de lumière et d'une face latérale opposée à ladite première section d'injection de lumière.

10. Système d'éclairage (L) selon l'une des revendications précédentes, dans lequel les structures de guidage de lumière (3, 14, 15) présentent un diffuseur (15), de préférence sous la forme d'une feuille de diffusion (15), lequel diffuseur est agencé sur une face de la pièce de guidage de lumière (10) qui est détournée du côté d'éjection de lumière (11) et/ou entre deux éléments de guidage de lumière (16, 17) de la pièce de guidage de lumière (10).

11. Système d'éclairage (L) selon l'une des revendications 8 à 10, dans lequel
• les éléments de guidage de lumière (16, 17) sont espacés les uns des autres,
• un matériau optiquement plus mince que le premier élément de guidage de lumière (17) se trouve entre les éléments de guidage de lumière (16, 17), et/ou
• un élément réflecteur destiné à réfléchir la lumière vers le côté d'éjection de lumière (11) est prévu entre le diffuseur (15) ou bien le diffuseur (15) est conçu réfléchissant sur sa face tournée vers le premier élément de guidage de lumière (17),
ledit diffuseur étant de préférence partiellement ouvert.

12. Système d'éclairage (L) selon l'une des revendications précédentes, dans lequel l'élément optique (20) présente un élément à lentilles optiques, de préférence sous la forme d'un élément à grille de lentilles en bloc (20).

13. Système d'éclairage (L) selon l'une des revendications précédentes, présentant en outre un élément de couverture (4) translucide qui est prévu sur l'extrémité de l'élément optique (20) qui est détournée de la pièce de guidage de lumière (10), est de préférence conçu d'un seul tenant avec l'élément optique (20) et présente en outre de préférence la surface de sortie de lumière (23).

14. Système d'éclairage (L) selon la revendication 13, dans lequel il est prévu un élément de raccord (5, 20) flexible, au moins du côté de la pièce de guidage de lumière (10), entre la pièce de guidage de lumière (10) d'une part et l'élément de couverture (4) d'autre part.

15. Système d'éclairage (L) selon la revendication 14, dans lequel le raccord se produit grâce au fait que
• l'élément optique (20) est conçu dans un matériau translucide et flexible au moyen duquel l'élément optique (20), qui sert d'élément de raccord flexible, est fixé à l'élément de couverture (4) et à la pièce de guidage de lumière (10), et/ou
• l'élément de raccord (5)
- est conçu dans un matériau translucide et flexible, et
- est fixé d'une part à l'élément optique (20) et d'autre part à l'élément de couverture (4) ou à la pièce de guidage de lumière (10),
ledit matériau étant de préférence une silicone optique,
ladite fixation s'effectuant de préférence au moyen d'une stratification, et
ledit matériau incluant ou présentant de préférence des éléments optiques servant à influer sur la lumière.

16. Dispositif d'éclairage (1),
• présentant
- un système d'éclairage (L) selon l'une des revendications précédentes, ainsi que
- des moyens luminescents (8) destinés à l'injection de lumière à travers au moins une des sections d'injection de lumière (12, 13) de la pièce de guidage de lumière (10) du système d'éclairage (L).

17. Dispositif d'éclairage (1) selon la revendication 16, dans lequel chacune des sections d'injection de lumière (12, 13) a au moins un moyen luminescent (8) qui y est associé, et/ou conçu sous la forme d'un luminaire à éclairage direct et/ou indirect, et/ou
présentant en outre
• des champs de diffusion (15) et/ou
• des structures d'éjection de lumière (20) supplémentaires, et/ou
présentant deux surfaces de sortie de lumière (23) opposées, ladite pièce de guidage de lumière (10) étant conçue pour dévier la lumière incidente de telle façon que la lumière subissant l'influence optique conformément à la caractéristique de rayonnement donnée soit émise vers l'extérieur du dispositif d'éclairage par les deux surfaces de sortie de lumière (23), et/ou présentant en outre plusieurs moyens luminescents (8) agencés en une ou plusieurs rangées.
